# EUROPEAN PATENT SPECIFICATION

(11) **EP 3 307 850 B1**
(45) Date of publication and mention of the grant of the patent: **15.05.2019**
(21) Application number: 16745200.2
(22) Date of filing: 10.06.2016
(51) Int. Cl.: C10B 49/06, B01D 53/22, C10B 53/02, C10C 5/00, F02B 43/08, B01D 45/12, C10L 1/02

(54) **SYSTEM AND METHOD FOR THE CONVERSION OF BIOMASS**
SYSTEM UND VERFAHREN ZUR UMWANDLUNG VON BIOMASSE
SYSTÈME ET PROCÉDÉ POUR LA CONVERSION D'UNE BIOMASSE

(30) Priority: 12.06.2015 NL 1041358; 31.03.2016 NL 2016519
(43) Date of publication of application: 18.04.2018
(73) Proprietor: Nettenergy B.V., 2771 GH Boskoop (NL)
(72) Inventor: VASBINDER, Robert Jan, 2771 GH Boskoop (NL)
(74) Representative: Algemeen Octrooi- en Merkenbureau B.V.
(86) International application number: PCT/NL2016/050420
(87) International publication number: WO 2016/200262

(56) References cited:
- WO-A1-2007/112570
- WO-A1-2012/027428
- WO-A2-2011/041756
- CH-B1- 705 828
- DE-A1-102009 030 013
- FI-B- 116 902
- JP-A- 2006 274 808
- US-A1- 2005 039 599
- US-A1- 2011 139 597
- LEENA FAGERNÄS ET AL: "Chemical Composition of Birch Wood Slow Pyrolysis Products", ENERGY & FUELS., vol. 26, no. 2, 16 February 2012 (2012-02-16), pages 1275-1283, XP055304581, WASHINGTON, DC, US. ISSN: 0887-0624, DOI: 10.1021/ef2018836

## Description

The present invention relates to a system for the conversion of biomass, a method for the conversion of biomass. In other aspects the present invention relates to the uses thereof.

There is a constant need to develop renewable sources of energy and feedstocks for the transport and industry to reduce the world's dependence on fossils fuels and petrochemicals. Biomass is a relatively low-cost and widely available source of energy and feedstocks for the chemical industry that represents a promising alternative to presently used non-renewable aforementioned sources. In recent years, intensive research has been carried out to develop methods to meet these needs using diverse biomass sources.

Biomass refers to biodegradable substances which originate from: a) virgin wood, e.g. from forestry, arboricultural activities or from wood processing, such as timber and wood chips from both hard and softwoods; b) energy crops, e.g. high yield crops grown specifically for energy applications, such as maize, Sudan grass, millet and willow; c) agricultural residues, e.g. residues from agriculture harvesting or animal products such as manure; d) food waste, e.g. from food and drink manufacture, preparation and processing, and post-consumer waste also referred to as municipal waste; e) industrial waste and co-products from manufacturing and industrial processes.

As mentioned above, biomass is not only increasingly used as a source of energy, but biomass represents a valuable source of chemicals. For example, raw biomass can be separated to provide added-value bio-based products (proteins, carbohydrates, oils) before energy production from the residues, for example, lignin-rich residue stream. Such processing prior to energy production is termed upstream valorisation. Likewise, downstream valorisation occurs after energy production and provides secondary (process) residue streams, such as ash fractions, heat, CO₂. By integrating up-/downstream processes with the process of energy production a biomass valorisation chain can be developed that is technically advanced, socio-ecologically acceptable and economically profitable and contributes to the benefits of the circular economy.

Despite the envisaged advantages of biomass valorisation there remain problems in realising this. Often biomass must be transported long distances to reach the refinery site. The biomass conversion site, or bio-refinery, is often at a different location to the upstream processing site, resulting in yet more transport of bulk goods.

A further bottleneck is the step of generating energy from biomass. Raw biomass has a low energy density and it is therefore desirable to convert raw biomass into a high energy density biomass derived product, before generating energy (e.g. heat or electricity). Existing biomass conversion technologies include combustion, gasification, slow pyrolysis, fast pyrolysis, biomass catalytic cracking, liquefaction and enzymatic conversion.

Particular attention has been applied to upgrade biomass into so-called bio-oil. Pyrolysis is a thermochemical decomposition of biomass at elevated temperatures in an oxygen free or oxygen poor atmosphere (i.e., significantly less oxygen than required for complete combustion). Pyrolysis may be carried out in the presence of an inert gas, such as nitrogen, carbon dioxide, and/or steam. Alternatively, pyrolysis can be carried out in the presence of a reducing gas, such as hydrogen, carbon monoxide, product gas recycled from the biomass conversion process, or any combination thereof.

Pyrolysis gives products which include non-reactive solids (char and ash), liquids (tar and/or pyroligneous acid), and non- condensable gases. Fast (rapid or flash) pyrolysis may be carried out wherein finely divided feedstock is rapidly heated and the reaction time is kept short, i.e. on the order of seconds. Such fast pyrolysis results in high yields of primary, non-equilibrium liquids and gases (including valuable chemicals, chemical intermediates, hydrocarbon chemicals and bio-fuels).

In conventional pyrolysis, oxygen is substantially excluded and the operating temperatures to achieve destructive distillation are typically about 380° C to 450° C. The destructive distillation results in a gas, a liquid and solid matter, i.e. char.

The combined water/organic liquid product that is condensed out after the pyrolysis or destructive distillation step may be a bio-oil or "pyroligneous acid" and mixtures thereof.

The goal of the fast pyrolysis process is to eventually produce an oily product that can be burned in an engine, e.g. a diesel engine. These pyrolysis plants have suffered and continue to suffer from a number of operational problems. Although under the proper time, temperature and heating rate conditions, the liquid product may include a phase resembling an "oil-like" substance, it is oxygenated and the oils and other components are partially soluble in the significant quantities of water that are also produced in pyrolysis.

The resultant bio-oil, also termed biomass pyrolysis oil, pyrolysis oil or biocrude, is a liquid mixture of oxygenated compounds comprising carbonyl, carboxyl and phenolic functional groups. Bio-oil may be processed into transportation fuels, hydrocarbon chemicals and/or speciality chemicals.The bio-oil is reported to be very corrosive. The heating value of the oily product is relatively low.

Numerous chemical species have been identified in the liquid product from a pyrolysis conversion of wood based biomass to bio-oil and pyroligneous acid. The pyroligneous acid typically comprises alcohols such as methanol, butanol, amyl alcohol, etc.; acids such as acetic, formic, propionic, valeric, etc.; bases such as ammonia, methylamine, pyridine, etc.; phenol and phenol-like substances syringol, cresol, etc.; and neutral substances such as formaldehyde, acetone, furfural, valerolactone, etc.

The solid byproducts remaining from pyrolysis of wood are sometimes termed "biochar" or "Terra Preta", and have been found to have agronomically beneficial properties.

Bio-oils obtained from conventional biomass converting technologies require extensive secondary upgrading in order to be utilized long-term as internal combustion engines due to the high amounts of water present in the bio-oil.

Conventional flash-pyrolysis is characterized by short residence times and rapid heating of the biomass feedstock. The residence times of the fast pyrolysis reaction can be, for example, less than 10 seconds, less than 5 seconds, or less than 2 seconds. Fast pyrolysis may occur at temperatures between 200 and 1,000 °C, between 250 and 800 °C, or between 300 and 600 °C. Such a process yields bio-oils with high amounts, i.e. more than 20 % w/w water, resulting in a reduced energy density. Furthermore the high water content may cause phase-separation over time when the bio-oil is stored.

A characteristic of bio-oil is that the elemental composition of bio oils is very similar to that of the original biomass and is very different from petroleum-derived fuels and chemicals. For example, the viscosity of a diesel fuel is < 2.39 mPa.s, whereas a bio-oil typically has a viscosity between 40-100 mPa.s. The oxygen content is typically between 35-40 wt%. The density of a diesel fuel is approx. 0.8, whereas that of a bio-oil is 1.2. As such, problems are frequently encountered when attempts are made to produce petroleum derived fuel/ bio-oil mixtures for combustion engines and gas turbines.

From the prior art, various systems are known for the conversion of biomass. For example, US2011/0123407 discloses a system for thermally converting biomass into a vapour comprising a fluidized bed reactor using a solid heat carrier e.g. sand, and a condensing chamber where the vapour is rapidly quenched. In order to sustain the fluidized bed, this system requires a considerable airstream, which also lifts the fine char produced in the reactor and therefore relatively large cyclones are needed for separating the char from the vapour. Such a system therefore has a relatively large footprint and requires a considerable capital investment.

CH 705828 B1 discloses a reactor for the production of charcoal. It is essentially a stationary reactor, the production of charcoal allowed in a continuous process in which the charge (eg. wood), as well as the discharge of the carbonized product takes place continuously. In this type of reactor, a good level of efficiency is given. The production of charcoal requires no external energy, and by the internal combustion affects heat directly to the charge. Only for auxiliary and control equipment such as flue gas vent and the electrical components required to control and regulate this system, a low electric power. The reactor does not provide means for collecting fluids.

DE 10 2009 030 013 A1 discloses a device, the use thereof, a method and a system for the continuous conversion of biomass. The apparatus according to this German patent application comprises a supply section for receiving a moving bed of biomass, in particular wood, comprising: a top portion for drying, a central portion of a flame zone for degassing and a lower portion, a glow region to carbonize the biomass to form a solid conversion product, especially charcoal; a grid which supports the moving bed and is permeable to the fixed conversion product downwards, whereby a collecting container is provided for collecting the solid conversion product, arranged below the grid, gas-tight to the environment with the supply portion can be coupled, and having a wall portion with a cooling device. In an embodiment, exhaust gases are discharged upwards through the supply area and passed above the feeding area in a column or a distilling apparatus in operation. There at least a volatile conversion product is at least partially separable. For this, a discharge means is (z. B. siphon) is provided which derives the deposited conversion product.

Conventional flash pyrolysis processes yield bio-oils containing relatively high amounts of water and organic acids, resulting in a reduced energy density. For example, WO 2012/109035 discloses a process comprising (a) converting at least a portion of the cellulosic biomass material in an oxygen-poor environment in the presence of a catalyst material at a temperature in the range of from about 200 °C to about 1000 °C to produce a reaction product stream containing the bio-oil composition; and (b) separating the bio-oil composition from the reaction product stream.

A disadvantage of the process disclosed by WO 2012/109035 is that a solid catalyst must be added to the pyrolysis process, which catalyst can cause unwanted side reactions with acid components in the reaction products. Furthermore, the use of a fluidized bed pyrolysis reactor leads to an unacceptable level of fines (particles smaller than 50 micrometres) that can cause damage to combustion engines. A subsequent treatment is therefore required to remove the fines from the bio-oil. The presence of catalyst residues in the biochar has a detrimental effect on the energy density of the obtained biochar and is suspected to accelerate aging (for example increase in viscosity) of the bio-oil.

Furthermore the high water content of the bio-oil from conventional pyrolysis may cause phase separation.

### Objective technical problem(s)

It is an object of the present invention to provide multiple products within the same system in an improved method for the conversion of biomass.

It is also an object of the present invention to provide a system and method for converting biomass to valuable fluid products having a lower energy consumption and a smaller footprint than conventional pyrolysis processes.

It is an object of the present invention to provide an improved bio-oil.

It is a further object of the present invention to provide a bio-oil having an improved stability on storage.

Further it is an object of the invention to provide a bio-oil having an improved energy density.

It an yet another object of the invention to provide pyroligneous acid.

### Embodiments

In a first aspect, the present invention provides a system for converting biomass, the system comprising:
A) a conversion unit (1) provided with an inlet (5) for introducing biomass, an inlet (6) for introducing a gas stream, an outlet (8) for removing carbonized material (9), and an outlet (10) for releasing a third fluid (F3), said conversion unit comprising:
   - a first heat transfer zone (1A) for heating the gas stream by direct contact between the gas stream and carbonized biomass having a first temperature level (CT1), resulting in the at least partial combustion thereof and a first fluid (F1) having a first temperature level (T1);
      - a second heat transfer zone (1B) for heating dried biomass by direct contact between the first fluid (F1) having a first temperature level (T1) and the dried biomass, resulting in the at least partial conversion thereof and the release of a second fluid (F2) having a second temperature level (T2);
      - a drying zone (1C) for drying a fresh biomass by direct contact between the second fluid (F2) having a second temperature level (T2) and the fresh biomass, resulting in a dried biomass and the release of a third fluid (F3) having a third temperature level (T3),
      - a discharge zone (1D) provided with outlet (8) for continuously removing carbonized material (9),
   said system further comprising:
B) a first separation unit (11), for separating solids and tar from the third fluid (F3) by direct contact between the third fluid (F3) and a first liquid, resulting in a fourth outlet fluid (F4) having a fourth outlet temperature level (T4) and a first outlet fraction (FR1), comprising essentially tar and solids;
C) a second separation unit (15) for separating an oil from the fourth outlet fluid (F4) by subjecting same to centrifugal forces, resulting in a fifth outlet fluid (F5) having a fifth outlet temperature level (T5) and a second outlet fraction (FR2) essentially comprising an oil;
   wherein the second separation unit (15) comprises at least one horizontal rotatable disk comprising at least one blade extending at least partly from the periphery towards the centre of the disk, whereby the intersection of blade and disk is at an angle with the disk radius of between 0 and 180 degrees, and extending at least partly from the disk in vertical direction, whereby the line extending from the peripheral intersection of blade and disk in a direction perpendicular to the blade is at an angle with the horizontal plane of between 0 and 90 degrees.
D) condensing unit (18), for condensing and separating residual liquids from the fifth outlet fluid (F5) by direct contact between the fifth outlet fluid (F5) and a second liquid and indirect contact with a cooling medium, resulting in a sixth outlet fluid (F6) having a sixth temperature level (T6) and a third fraction (FR3), essentially comprising a mixture of water and acids.

In an embodiment, the system is provided with a heat exchanger for preheating the gas stream prior to introducing the gas stream to the first heat transfer zone (1A).

In an embodiment, the gas stream is ambient air.

In an embodiment, the second separation unit (15) comprises one or multiple sequential units wherein the outlet temperature of the last unit equals the fifth temperature level and the inlet temperature of the first unit equals the fourth temperature level in order to separate the second fraction in one or multiple sub-fractions.

In an embodiment, the system comprises a ventilator (22) for creating a gas stream, the ventilator being located downstream relative to the condensing unit (18).

In an embodiment, the system comprises a third separation unit (24) for separating residual liquids from the sixth fluid, resulting in a gas stream and a fourth fraction, essentially comprising a mixture of oil and water.

In an embodiment, the first liquid is water.

In an embodiment the second liquid at least partly comprises the first fraction collected from the first separation unit (11).

In an embodiment the cooling medium is water or ambient air.

In an embodiment the system further comprises:
- an engine (30), for converting a pyrolysis gas to mechanical power;
- a generator (33), for converting the mechanical power provided by the engine (30) through a first drive shaft (32) into electrical power;
- a compressor (35), for compressing ambient air to a first pressure level, using mechanical power provided by the engine (30) through a second drive shaft (34), which is directly connected to the first drive shaft (32);
- a membrane separation unit (38), for separating the compressed air having a first pressure level into a first gas fraction, comprising essentially pure nitrogen at a second pressure level, and a second gas fraction, comprising ambient air having an increased oxygen level and a third pressure level.

In an embodiment the system further comprises a drying unit (41), said drying unit comprising an inlet for bio-oil (42), optionally an inlet for drying additives (43) and an outlet (44) for the dried bio-oil.

In a second aspect, the present invention relates to a method for converting biomass into carbonized material and fluids, the method comprising the steps of:
i) heating a gas stream by direct contact in a first heat transfer zone (1A) in a conversion reactor between the gas stream and carbonized biomass having a first temperature level (CT1), resulting in the at least partial combustion thereof and a first fluid (F1) having a first temperature level (T1);
ii) heating dried biomass by direct contact in a second heat transfer zone (1B) between the first fluid (F1) having a first temperature level (T1) and the dried biomass, resulting in the at least partial conversion thereof and the release of a second fluid (F2) having a second temperature level (T2);
iii) drying fresh biomass by direct contact in a drying zone (1C) between the second fluid having a second temperature level and the fresh biomass, resulting in a dried biomass and the release of a third fluid (F3) having a third temperature level (T3),
iv) continuously removing carbonized biomass from a discharge zone (1D),
v) continuously providing the third fluid (F3) released from outlet (10) of conversion unit (1) to the first separation unit (11) to provide a fourth fluid (F4) and a first fraction (FR1) being essentially tar and solids, wherein a first liquid, preferably water, more preferably water spray, is introduced to inlet (12), which liquid cools said fluids and gases to a first temperature level in order to remove solid and/or tar particles which may have formed during the preceding thermal conversion and which may have been entrained in the third fluid, and
vi) introducing the fourth fluid (F4) to the second separation unit (15), wherein the fourth fluid is subjected to centrifugal forces to provide a second fraction comprising bio-oil having a water content of less than 5 % w/w and a fifth fluid (F5) having a fifth temperature level (T5), wherein that the second separation unit (15) comprises at least one horizontal rotatable disk comprising at least one blade extending at least partly from the periphery towards the centre of the disk, whereby the intersection of blade and disk is at an angle with the disk radius of between 0 and 180 degrees, and extending at least partly from the disk in vertical direction, whereby the line extending from the peripheral intersection of blade and disk in a direction perpendicular to the blade is at an angle with the horizontal plane of between 0 and 90 degrees.

In an embodiment, the method, further comprises the step vii) of condensing and separating residual liquids from the fifth fluid (F5) by direct contact between the fifth fluid (F5) and a second liquid and indirect contact with a cooling medium in a condensing unit (18), resulting in a sixth fluid (F6) having a sixth temperature level (T6) and a third fraction (FR3) comprising a mixture of water and acids.

In an embodiment, the method further comprises the step vii) of subjecting the bio-oil obtained in step vi) to a drying step to provide a bio-oil having a water content of less than 1 w/w.

In an embodiment, step vii) is carried out in the presence of an amine, selected from the group consisting of ammonia, primary, secondary and tertiary amines.

In an embodiment, the carbonized material (9) has a carbon content of between 70 and 100 % by weight based on the dried mass of the carbonized material, preferably between 80 and 90 % by weight based on the dried mass of the carbonized material (9).

In an embodiment, said acids are pyroligneous acids (FR3) having a water content of between 70 and 90 % w/w and an oxygenated hydrocarbon content of between 30 and 10 % w/w.

In an embodiment, gas emitted from the conversion unit is collected and supplied to a burner to be used as energy generation for the pyrolysis reactor.

In an embodiment, the biomass is selected from the group of wood, energy crops, agricultural residues, food waste, post-consumer waste and industrial waste, preferably wood.

In an aspect, the present invention relates to the use of the system as provided herein for carrying out the method as provided herein. In an aspect, the present invention relates to the use of a system as provided herein, for the production of at least a carbonized material and a bio-oil.

### Detailed description

The has been found that a system for converting biomass as defined herein, that provides a compact unit which can be provided as a mobile conversion unit that is transported to a location where biomass is available in abundance.

For the first time there is provided a system that meets the growing need to convert biomass to value added products at the biomass location. Furthermore the system may be operated as an autonomous unit since the pyrolysis gas produced from the biomass may be used in a generator in order to provide electrical power to the system of the invention.

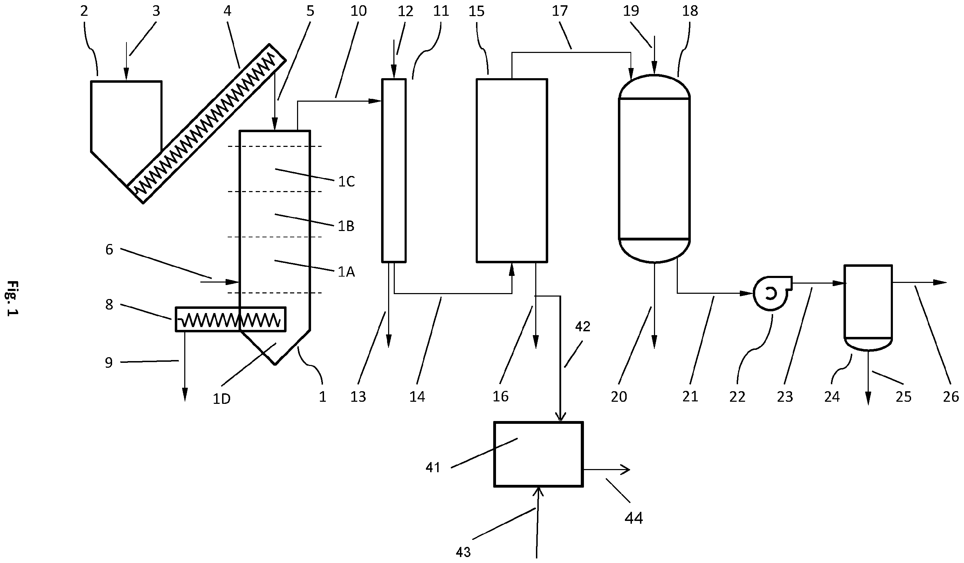

As shown in Fig. 1, the system comprises a conversion unit 1 comprising a first heat transfer zone 1A, a second heat transfer zone 1B, a drying zone 1C and a discharge zone 1D. The conversion unit 1 is further provided with an inlet 5 for introducing biomass, an inlet 6 for introducing an airstream, an auger 8 for removing carbonized material, having an outlet 9 to a storage container (not shown) and an outlet 10 for releasing a fluid. The system further comprises a hopper 2, provided with an inlet 3 and an auger 4 which is connected to and in open or closed communication with inlet 5 of conversion unit 1.

The outlet 10 is connected to and in open communication with a first separation unit 11, which is provided with an inlet 12, a first outlet 13, and a second outlet 14, which is connected to and in fluid communication with a second separation unit 15.

The second separation unit 15 is further provided with means for exerting centrifugal forces on the introduced fluids (not shown), a first outlet 16 and a second outlet 17, which is connected to and in fluid communication with a condensing unit 18.

The condensing unit 18 is further provided with an inlet 19, means for introducing and releasing cooling media (not shown), a first outlet 20 and a second outlet 21, which is connected to and in fluid communication with a ventilator 22, having a ventilator outlet 23, which is connected to and in fluid communication with a third separation unit 24, which is provided with a first outlet 25, and a second outlet 26, which is connected to and in fluid communication with a gas burner or engine (not shown).

The rate determining parameters for the conversion of biomass in a conversion unit include without limitation temperature, pressure, concentration, residence time and exposed contact area. Biomass generally has a relatively low heat capacity; therefore to quickly heat same and accomplish a rapid conversion thereof, the size of the biomass particles preferably is between 1 and 50 mm, more preferably between 5 and 25 mm and most preferably between 8 and 10 mm.

The inlet 5 for introducing biomass is preferably arranged in a central location in the upper part of conversion unit and comprises a horizontal section, provided with transport means such as an auger, and a vertical section having an open end or chute which is exactly centred relative to the walls of conversion unit 1. Most preferably, said vertical section has an adjustable height relative to the bed of biomass deposited therefrom, in order to accomplish a homogeneous and perfect conical deposition of fresh biomass. The conical shape of the biomass bed also results in a lower flow resistance for any fluid introduced thereto than would be accomplished by a horizontal or sloped flat bed.

Furthermore, inlet 5 preferably is provided with locking means in order to prevent any inflow of ambient air into the upper part of conversion unit 1 where such inflow may result in the formation of explosive mixtures of fluids and ambient air.

Rapid conversion also requires an intimate contact between biomass particles and the medium transferring heat thereto. Ambient air is used as the primary source for the heat transfer medium and the homogeneous distribution thereof is accomplished by preferably arranging inlet 6 in a central location in the lower part of conversion unit 1. More preferably, inlet 6 comprises at least an air distributor having a horizontal outlet. Optionally, inlet 6 comprises a vertical outlet provided with holes for distributing air to the biomass bed. The homogeneous distribution of air may require inlet 6 to comprise a number of such air distributors, which are preferably arranged and evenly distributed in a horizontal plane, thus creating an initially horizontal and ultimately upward airstream. Most preferably, the at least one air distributor guides at least part of the airstream directly towards the wall of conversion unit 1 in order to create a very effective conversion zone preventing any biomass from passing said zone prior to being completely converted. The conversion unit 1 may be provided with a heat exchanger (not shown) for preheating ambient air with heat from the pyrolysis process prior to introducing the air to the system. The use of preheated air will increase the biomass conversion capacity of conversion unit 1.

After complete conversion, the carbonized residue preferably is removed from discharge zone 1D in such a way that the perfect conical shape accomplished by the homogeneous deposition of fresh biomass from inlet 5 is maintained. To that effect auger 8 and/or the geometry of discharge zone 1D are appropriately adapted to effect an even removal of carbonized residue from the unit. The continuous removal of carbonized biomass from discharge zone 1D maximizes the capacity of the unit 1 for the conversion of biomass.

In order to start conversion, the hopper 2 is filled with biomass e.g. wood chips. The auger 4 is started in order to load wood chips to the conversion unit 1 through inlet 5, until the wood chips have reached a desired level or height therein. The ventilator 22 is started and the wood chips in the first heat transfer zone 1A are ignited with external ignition means e.g. a gas torch (not shown).

The airstream, distributed from inlet 6, supports the at least partial combustion of carbonized biomass in the first heat transfer zone 1A by providing oxygen thereto and is thereby essentially depleted of oxygen and directly heated to a first temperature level, resulting in a mixed and heated first fluid, which subsequently serves as heat transfer medium for transferring heat to dry wood chips in the second heat transfer zone 1B, located directly above the first heat transfer zone 1A.

The first fluid released from the first heat transfer zone 1A enters the second heat transfer zone 1B and rapidly heats the dry wood chips, resulting in a rapid conversion of wood and the formation of a mixed second fluid having a second temperature level. The porous bed of wood chips allows the mixed second fluid to enter the drying zone 1C, located directly above the second heat transfer zone 1B, and subsequently transfer heat to freshly deposited wood chips. The second fluid rapidly heats the fresh wood chips resulting in a rapid drying thereof and the formation of a mixed third fluid having a third temperature level, which is subsequently released from outlet 10.

The carbonization and at least partial combustion in the first heat transfer zone most preferably takes place at a temperature exceeding 600°C. The carbonized wood chips are discharged continuously and evenly from the discharge zone (1D) and collected as bio-char. In the context of the present invention, the terms bio-char and carbonized material are used interchangeably.

The third fluid released from outlet 10 of conversion unit 1 is introduced to the first separation unit 11. A first liquid, such as a water spray is introduced to inlet 12, which liquid cools said fluids and gases to a first temperature level in order to remove solid and/or tar particles which may have formed during the preceding thermal conversion and which may have been entrained in the third fluid. Preferably, the first fluid is introduced to the inlet simultaneously with the third fluid. The temperature of outlet 14 preferably is between 160 and 200°C in order to separate a first fraction, which comprises essentially tar and solids and collect same from outlet 13 and release a quenched fourth fluid from outlet 14 and introduce same at the bottom of the second separation unit 15, where the fourth fluid is subjected to centrifugal forces in order to essentially coalesce and separate at least part of the fourth fluid. The temperature of outlet 17 preferably is between 80 and 200°C. From outlet 16, a second fraction is separated and collected, which essentially comprises bio-oil.

The separation unit 15 is provided with at least one horizontal rotatable disk comprising at least one blade extending at least partly from the periphery towards the centre of the disk, whereby the intersection of blade and disk is at an angle with the disk radius of between 0 and 180 degrees, and extending at least partly from the disk in vertical direction, whereby the perpendicular line extending from the peripheral intersection of blade and disk is at an angle with the horizontal plane of between 0 and 90 degrees. The disk is rotated at such a rate that even very small oil droplets are accelerated in a horizontal direction and thus are forced to impact the wall of the separation unit 15. As a result, the oil droplets coalesce on said wall and by the action of gravity flow as a film in a downward direction where they are collected. The oil film continuously cleans the wall of separation unit 15 and prevents fouling. Furthermore, the second separation unit 15 is very compact and the second fraction, separated therein and collected from outlet 16, has a relatively stable water content irrespective of the water content in the wood chips introduced to the conversion unit 1.

The second separation unit 15 may be provided as a single unit having a certain outlet temperature, thus providing a single fraction of bio-oil. Alternatively, separation unit 15 may comprise various different stages, each operating at a different temperature range or may be provided as multiple sequential units, which are connected to and in fluid communication with each other in series, each unit having a different outlet temperature, e.g. a first outlet temperature of 160°C, a second outlet temperature of 140°C, and a third outlet temperature of 120°C, in order to collect individual sub-fractions of bio-oil.

In embodiment, the system further comprises a drying unit (41), said drying unit comprising an inlet for bio-oil (42), optionally an inlet for drying additives (43) and an outlet (44) for the dried bio-oil.

In an embodiment, the bio-oil obtained from the separator (15) is fed to a drying unit for further downstream processing. Said drying unit may be a distillation unit, vacuum pump or other such device suitable for removing residual water from the bio-oil. The drying unit may comprise an inlet for addition of drying additives, such as azeotropes.

After separation of the second fraction, the remaining fifth fluid is released from outlet 17 and introduced to the upper part of indirect condensing unit 18. At the same time a cooling medium is provided to indirect condensing unit 18 at such a rate that the fifth fluid is cooled to a second temperature level in order to condense a third fraction, which essentially comprises an aqueous solution having a relatively high acidity (pH <4) and a relatively low energy content, and collect same from outlet 20. After condensing said third fraction, the residual sixth fluid is released from outlet 21. The temperature of outlet 21 preferably is between 10 and 50°C.

The ventilator 22 provides the driving force for the fluid and gas stream through the system. Upon actuation, ventilator 22 reduces the pressure in outlet 21 and since this outlet is connected to and in fluid communication with condensing unit 18, second separation unit 15 and first separation unit 11, all the way through to conversion unit 1, said reduced pressure is ultimately communicated to inlet 6 of conversion unit 1. Thus, ventilator 22 provides the driving force for the introduction of ambient air to inlet 6, the upward airstream in conversion unit 1 and the resulting stream fluids through the system. The reduced system pressure also facilitates the evaporation of fluids and stabilizes the temperature ranges of the various system components.

The sixth fluid passes through ventilator 22 and is released from outlet 23 and introduced to a third separation unit 24, which has a higher pressure than system upstream ventilator 22. As a result, a fourth liquid fraction is separated and collected from outlet 25, which essentially comprises a bio-oil having a relatively high water content (≥ 20%). The residual fuel gas, also termed pyrolysis gas, is released from outlet 26 to a gas burner or engine (not shown).

Since the pyrolysis gas, released from outlet 26 of separation unit 24, may have a useful energy content, it is very advantageous to use said gas, as fuel gas for e.g. an engine connected to a generator unit. It is furthermore very advantageous to directly connect such a generator, powered by an engine operated with pyrolysis gas from the conversion of biomass, to a compressor for compressing ambient air in order to drive same without transmission losses.

It is particularly advantageous to introduce said second gas fraction into inlet 6 of conversion unit 1 since the capacity for converting biomass thereof will increase proportional to the oxygen content of said second fraction.

The system according to the invention will preferably be provided with various sensors and controls e.g. pressure and temperature sensors and control valves in order to control and regulate the method according to the invention. Furthermore, the system according to the invention is preferably provided with a processor for automatic operation thereof. Such sensors, controls and processor are considered to be state of the art which is well-known to the skilled person.

In a second aspect, the present invention relates to a method for converting biomass into carbonized material and fluids, the method comprising the steps of:
i) heating a gas stream by direct contact in a first heat transfer zone (1A) in a conversion reactor between the gas stream and carbonized biomass having a first temperature level (CT1), resulting in the at least partial combustion thereof and a first fluid (F1) having a first temperature level (T1);
ii) heating dried biomass by direct contact in a second heat transfer zone (1B) between the first fluid (F1) having a first temperature level (T1) and the dried biomass, resulting in the at least partial conversion thereof and the release of a second fluid (F2) having a second temperature level (T2);
iii) drying fresh biomass by direct contact in a drying zone (1C) between the second fluid (F2) having a second temperature level (T2) and the fresh biomass, resulting in a dried biomass and the release of a third fluid (F3) having a third temperature level (T3),
iv) continuously removing carbonized biomass from a discharge zone (1D),
v) continuously providing the third fluid (F3) released from outlet (10) of conversion unit (1) to the first separation unit (11) to provide a fourth fluid (F4) and a first fraction (FR1) being essentially tar and solids, wherein a first liquid is introduced to inlet (12), which liquid cools said fluids and gases to a first temperature level in order to remove solid and/or tar particles which may have formed during the preceding thermal conversion and which may have been entrained in the third fluid, and
vi) introducing the fourth fluid (F4) to the second separation unit 15, wherein the fourth fluid is subjected to centrifugal forces to provide a second fraction comprising bio-oil having a water content of less than 5 % w/w and a fifth fluid (F5) having a fifth temperature level (T5), wherein that the second separation unit (15) comprises at least one horizontal rotatable disk comprising at least one blade extending at least partly from the periphery towards the centre of the disk, whereby the intersection of blade and disk is at an angle with the disk radius of between 0 and 180 degrees, and extending at least partly from the disk in vertical direction, whereby the line extending from the peripheral intersection of blade and disk in a direction perpendicular to the blade is at an angle with the horizontal plane of between 0 and 90 degrees.

It has been found that the conventional process for converting (pyrolysing) biomass can be improved by a providing a continual process in which the fluid product of the biomass conversion process, i.e. by pyrolysis, is first subjected to a separating step in which the fluid product is cooled via cooling means such as a water cooled heat-exchanger in order to remove any solid and/or tar particles that may have formed during the preceding pyrolysis and become entrapped in the said fluid, before subjecting the fluid to centrifugal forces, in order to provide at least a second fraction, being a bio-oil having a low water content, that is less than 5 % w/w, and a further fluid (F5).

An advantage of the present method is that there is no need to carry put additional process steps, for example to adjust the specific gravity of the third and/or further fluids obtained in the method, in order to facilitate the removal of water it to enable the continual collection of a bio-oil having a water content of less than 5 % w/w. This provides a long sought improvement over the known flash-pyrolysis bio-oils which are upgraded by modulating the specific gravity of the bio-oil to induce separation of the water and oil phases in the bio-oil.

Not only does the inventive process provide a bio-oil, but multiple other products are also formed and continually collected within the same system. Preferably, collection of the different products occurs simultaneously. The carbonized material (bio-char) is removed from the pyrolysis reactor and pyrolysis gas is also collected. Following separation of the bio-oil, a further, third fluid is separated, preferably simultaneously, namely pyroligneous acid. The linking of the pyrolysis reactor to the separators for the multiple products means that the products can all be collecting in the same process, and preferably simultaneously. Such an all-in-one process overcomes the problem of transporting biomass and biomass derived products to other processing sites.

The step of heating under pyrolysis conditions preferably takes place at a temperature exceeding 600 °C, more preferably above 800 °C, and even more preferably above 1000 °C. Within the meaning of the present invention, pyrolysis means the thermochemical decomposition of biomass at elevated temperatures in an oxygen free or oxygen poor atmosphere (i.e., significantly less oxygen than required for complete combustion). Pyrolysis may be carried out in the presence of an inert gas, such as nitrogen, carbon dioxide, and/or steam. Alternatively, pyrolysis can be carried out in the presence of a reducing gas, such as hydrogen, carbon monoxide, product gas recycled from the biomass conversion process, or any combination thereof.

The temperature of the first fluid is preferably between 160 and 200 °C. The temperature level of the second fluid is preferably between 80 °C and 200 °C, more preferably between 120 and 180°C.

The residence time for the biomass in the reactor is typically between 1 and 10 minutes, preferably between 1 and 7 minutes, more preferably between 1 and 5 minutes.

In an embodiment, the present method also enables the continual collection of the partially combusted biomass product, e.g. biochar. The biochar of the present invention has a typical energy density of 28 LHV MJ/kg, which can be used as a renewable source for energy generation. Pyrolysis in the present method preferably takes places in the absence of any catalysts or fluidized bed particles resulting in a biochar that is devoid of inorganic particles not present in the starting biomass. This represents an improvement over other pyrolysis technologies, such as biomass catalytic cracking (BCC) in which the catalysts used to achieve pyrolysis conditions may contaminate the biochar product, resulting in a lower energy density and higher mineral content the BCC biochar.

In embodiment, the method further comprises the step of separating a sixth fluid (F6) from the condensing part of the fifth fluid (F5) to provide an aqueous acid product. The aqueous acid product can be described as pyroligneous acid. This pyroligneous acid is characterized by a water content of between 70 and 90 % w/w and an oxygenated hydrocarbon content of between 30 and 10 % w/w. Preferably, the water content is less than 80 % w/w, even more preferably less than 75 % w/w and most preferably less than 70 % w/w. Preferably, the oxygenated hydrocarbon content is more than 20 % w/w, preferably more than 25 % w/w and even more preferably more than 30 % w/w.

In another embodiment, the method of the present invention further comprises the step of subjecting the obtained bio-oil to a drying step to provide a bio-oil having a water content of less than 1 w/w.

In one embodiment, an azeotrope agent is added to the bio-oil, wherein the azeotrope agent comprises one or more C₆-C₁₀ water-insoluble hydrocarbons, and the resultant mixture is subjected to azeotropic distillation to provide a water-rich product and a water-depleted bio-oil product. The water-rich product comprises at least 75 weight percent of the bound water originally present in the bio-oil.

The amount of azeotrope agent added to the bio-oil can be at least 1, 3, 5, or 10 % w/w of the bio-oil comprising bound water, but not more than 20, 40, 60, or 80 weight percent of the bio-oil comprising bound water, and can also be in the range of from 1 to 60 weight percent of the bio-oil comprising bound water.

The azeotrope agent may be a non-polar solvent that is generally comprised of one or more C₆-C₁₀ water- insoluble hydrocarbons. In one embodiment, the C₆-C₁₀ water-insoluble hydrocarbons being linear, cyclic or branched alkanes or alkenes or aromatic hydrocarbons.

In an embodiment, the linear alkane is selected from the group consisting of n-hexane, n-heptane, n-octane, n-nonane and n-decane. Preferably, the linear alkane is n-octane.

In another embodiment, the branched alkane is selected from the group consisting of iso-hexane, iso-heptane, iso-octane, iso-nonane and iso-decane. Preferably, the branched alkane is iso-octane.

In yet another embodiment, aromatic hydrocarbons is selected from the group consisting of toluene, xylene, naphthalene, and benzene. Preferably the aromatic hydrocarbon is toluene.

In an embodiment, the drying step vii) is carried out in the presence of an amine, selected from the group consisting of ammonia, primary, secondary and tertiary amines. The amine may be that as described above.

In an embodiment, the at least partially combusted biomass product is carbonized material having an oxygen content of between 10 and 40 % by weight based on the dried mass of the biochar.

In an embodiment, the carbonized material has a carbon content of between 70 and 90 % by weight based on the dried mass of the carbonized material, preferably between 80 and 95 % by weight based on the dried mass of the carbonized material.

In an embodiment, the gases collected are supplied to a burner to be used as energy generation for the pyrolysis reactor. It has been found that the gases collected have a useful energy content. As such, the gases can be fed into a gas generator supplying excess of electricity over and beyond the electricity consumed by the process itself.

In an embodiment, the biomass is selected from the group of wood, energy crops, agricultural residues, food waste, post-consumer waste and industrial waste, preferably wood.

The bio-oil obtained using the method or the system of the present invention has a stability that enables the bio-oil to be stored for extended periods of time without leading to phase-separation, in contrast to the bio-oils of the prior art. Moreover, the bio-oil of the present invention is suitable for use as a heating oil without undergoing further secondary upgrading. The bio-oil of the present invention has a water content of less than 1 % w/w, preferably less than 0.5 w/w.

As used herein, the "stability" of a bio-oil is defined as the change in viscosity over time. Stability is determined by the slope of a best-fit straight line for a plot of bio-oil viscosity (mPa.s) over time (hours). The plotted viscosity values are of samples of the aged bio-oil at 50°C, the aging process is carried out at 90°C and the samples are taken at the onset of aging (time = 0 hours), and at suitable time intervals from the onset of aging up to 48 hours from the onset of aging. The quality of the best fit is judged from the usual statistical parameters, such as the correlation coefficient squared (R2, standard error of estimate (s.e) and Fisher's variance ratio or F-test (F). The latter is particularly important for high stability oils where the best-fit slope tends to zero. A high stability oil is an oil whose viscosity changes by less than 10 mPa.s/h. A ultra-stable oil has a viscosity that remains constant after 48 hours at 90 °C. In other words, the stability shows that there is no change in viscosity over time.

Generally, low stability bio-oil has a stability greater than 75 mPa.s/h, intermediate-stability bio-oil has a stability in the range of 30 to 75 mPa.s/h and high-stability bio-oil has a stability of less than 30 mPa.s/h. Additionally, bio-oil with a stability of less than 10 mPa.s/h can be classified as a highly stable bio-oil so that high-stability bio-oil is that with a stability parameter below 30 mPa.s/h, preferably at least 10 mPa.s/h, more preferably at least 1 mPa.s/h and most preferably zero after 40 hours.

As used herein, total acid number (TAN) is defined as the mg KOH/g needed to reach the endpoint of the titration involving a 0.5-1.0 % w/w solution of bio-oil in a 50 % ethanol aqueous solution and 0.1 N NaOH, the end point being determined by the maximum of the first derivative of the titration curve. It has been found that the bio-oil of the present invention having a water content of less than 5 % w/w has a TAN of between 80 and 150, which is means that the bio-oil of the present invention is less acidic, i.e. less corrosive than bio-oils of the prior art.

In an embodiment, the bio-oil has a total acid number of between 30-80 mg KOH/g, preferably 40-70, more preferably 50-60 mg KOH/g.

In an embodiment, the bio-oil has a total acid number of between 0-80 mg KOH/g, preferably 10-70, more preferably 15-60 mg KOH/g, even more preferably 20-40 mg/KOH/g, most preferably 20-30 mg/KOH/g.

In an embodiment, the bio-oil has a total acid number of between 10-80 mg KOH/g, preferably 15-60, more preferably 20-50 mg KOH/g.

In an embodiment, the bio-oil has a total acid number of between 0 to 30 mg KOH/g, preferably 0 to 20, more preferably 0-10 mg KOH/g.

Bio-oils characterized by a low TAN, that is less than 80 mg KOH/g, less than 30 mg KOH/g and less than 10 mg KOH/g have been found to have an increased storage stability. Not only is the storage lifetime improved, the low level of acidity means that such oils are less corrosive and therefore more suited to use in fuel compositions than bio-oils of the prior art having higher TAN values.

The oxygen content as described herein is defined as the weight percent based on dry mass of a bio-oil as determined using elemental analysis.

Many of the existing biomass conversion processes produce bio-oils containing high amounts (e.g. > 20 % w/w) of "bound water". "Bound water" is water that is physically and/or chemically bound within the bio-oil so that it does not naturally separate from the bio-oil. Bio-oils containing such high amounts of bound water are not readily miscible with hydrocarbons due to their high polarity and, thus, require extensive secondary upgrading in order to be utilized as transportation fuels, petrochemicals, and/or specialty chemicals. Additionally, the bound water in these bio-oils tends to increase the amount of organic acids present in the bio-oil, thus increasing its corrosive nature and diminishing its ability to be stored over long periods of time., i.e. reducing the stability of the bio-oil over time.

In an embodiment, the biomass is selected from the group of industrial waste, garden waste and municipal waste. The biomass used in the present invention may be an industrial waste, for example wood chips, pallets, wood pellets, timber and timber off-cuts. The biomass may also be garden waste being waste wood, grass and other vegetation. The biomass may also be municipal waste, being food waste, sewage waste and other organic material comprising waste streams.

In an embodiment, the biomass is plant based biomass comprising carbohydrate polymers and oligomers and lignin, for example between 65-75% carbohydrate polymers and oligomers and 18-35% lignin. In the present context, plant based biomass encompasses wood. Other components may comprise organic extractives and inorganic minerals, usually 4-10%.

In an embodiment, the biomass comprises wood, the wood being either a hardwood or softwood, preferably a hardwood. Typically, softwoods comprise 23-33% lignin and hardwoods comprise 16-25% lignin.

In an embodiment, the bio-oil is derived from a hardwood comprising biomass having a lignin content of less than 25 % w/w, the hardwood being selected from the group consisting of Alder, Ash, Aspen, Beech, Birch, Boxwood, Cherry, Cottonwood, Elm, Hackberry Hickory, Hard maple, Horse chestnut, Oak Sassafras, Maple, Olive tree, Poplar, American tulipwood, Walnut and Willow.
A lignin content of more than 25 % w/w is typical of a softwood, the softwood being for example Araucaria, Cedar, Cypress, Douglas-Fir, Fir, Hemlock, Kauri, Larch, Pine, Red Cedar, Redwood, Spruce, Sugi, White Cedar and Yew.

The problems associated with bound water and the presence of organic acids is particularly relevant to bio-oil derived from wood comprising biomass.

The present inventors are able to provide for the first time a bio-oil derived a stability of less than 10 mPa.s/h and a viscosity of 400 mPa.s/h from a biomass comprising wood, for example beech wood.

In an embodiment, the bio-oil has a water content that is less than 1 % w/w. In another embodiment, the bio-oil has a water content of less than 0.5 % w/w. The low water content results in a bio-oil having a surprisingly high stability of less than 10 mPa.s/h.

It has been found that when the water content is less than 1 % w/w, and even more preferably less than 0.5 % w/w a bio-oil is provided that has an energy density comparable per unit volume to that of diesel. For example a bio-oil made by pyrolysis of beech wood in a process according to the present invention has an energy density of 31 MJ/L compared to 36 MJ/L for diesel.

The present invention provides more stable bio-oil compositions, than those described in the prior art. In certain embodiments, the bio-oil of the present invention, has a stability less than 10 mPa.s/h less than 5 mPa.s/h, and preferably no greater than 4 mPa.s/h, no greater than 3 mPa.s/h, or no greater than 2 mPa.s/h. In one or more embodiments, the bio-oil may have a stability of less than 30 mPa.s/h, less than 20 mPa.s/h, less than 15 mPa.s/h, less than 10 mPa.s/h, less than 5 mPa.s/h, less than 2 mPa.s/h, less than 1 mPa.s/h, or less than 0.5 mPa.s/h. In an embodiment, the bio-oil composition may have a stability of less than 0.2 mPa.s/h. In embodiment, the bio-oil composition has a stability that does not change when the bio-oil is heat at 90 °C for 48 hours, the stability is therefore zero. In an embodiment, the bio oil may comprise oxygenated hydrocarbons. "Oxygenated hydrocarbon" means a hydrocarbon comprising between 1 and 50 carbons that is substituted by at least one oxygen atom, and preferably at least two oxygen atoms. Without wishing to be bound by theory, it is proposed that the oxygenated hydrocarbons provide a potential energy that is released on burning. The presence of oxygenated hydrocarbons therefore has a positive effect on the combustion properties of the bio-oil according to the present invention.

In another embodiment, an amine is present in the bio-oil. Surprisingly on addition of an amine to the bio-oil of the present invention, an improvement is seen regarding the stability of the bio-oil. On storage, the pH and viscosity of the bio-oil remain constant. It has been found that due to the low water content of the bio-oil according to the present invention, i.e. less than 20 % w/w amine needs to be added to the bio-oil of the present invention to achieve acid neutralization. The effect of the combination of the low water content and presence of an amine is that a remarkably low TAN number of down to zero can be achieved, compared to 100 for a standard bio-oil, as reported by Jani Lehto, Anja Oasmaa, Yrjö Solantausta, Matti Kytö & David Chiaramonti. Espoo 2013. VTT Technology 87, page 18 "Acidity of pyrolysis bio-oils".

In an embodiment, less than 15 % w/w, more preferably less than 10 % w/w, even more preferably less than 5, most preferably less than 1 % w/w amine is present to neutralize the bio-oil. In the context of the present invention, neutralize means to reduce the TAN to zero.

Moreover, such small volumes of amine are required that, contrary to expectations, no adverse effects on the level of NOx produced by internal combustion engines is observed when such a bio-oil is blended with a fuel for a combustion engine.

In an embodiment, the bio-oil comprises an amine, selected from the group consisting of ammonia, primary amines, secondary amines, tertiary amines and mixtures thereof. Ammonia is particularly preferred due to its low cost.

In an embodiment, the bio-oil comprises a primary amine being selected from the group consisting of urea, monoalkylamines, monoalkanolamines and poly-alkylpolyamines. Alternatively, the primary amine is urea. In an embodiment, the bio-oil comprises a secondary amine being selected from the group consisting of dialkylamines, dialkanolamines and poly-dialkylpolyamines. In an embodiment, the bio-oil comprises a tertiary amine being selected from the group consisting of trialkylamines, trialkanolamines and poly-trialkylpolyamines.

In an embodiment, the alkanolamine is a primary and/or secondary amine selected from the group consisting of ethanolamine, propanolamine, isopropanolamine, butanolamine, isobutanolamine, methylethanolamine, dimethylethanolamine, butylethanolamine, diethanolamine, dipropanolamine, diisopropanolamine, dibutanolamine, diisobutanolamine, and mixtures thereof.

Preferably, the primary, secondary or tertiary amine is a polyamine having from 2 to about 12 amine nitrogen atoms and from 2 to about 40 carbon atoms. The polyamine preferably has a carbon-to-nitrogen ratio of from about 1:1 to 10:1.

The polyamine may be substituted with substituents selected from (A) hydrogen, (B) hydrocarbyl groups of from 1 to about 10 carbon atoms, (C) acyl groups of from 2 to about 10 carbon atoms, and (D) monoketo, monohydroxy, mononitro, monocyano, lower alkyl and lower alkoxy derivatives of (B) and (C) . "Lower", as used in terms like lower alkyl or lower alkoxy, means a group containing from 1 to about 6 carbon atoms. At least one of the substituents on one of the basic nitrogen atoms of the polyamine is hydrogen, e.g., at least one of the basic nitrogen atoms of the polyamine is a primary or secondary amino nitrogen.

Hydrocarbyl, as used in describing the polyamine moiety on the aliphatic amine employed in this invention, denotes an organic radical composed of carbon and hydrogen which may be aliphatic, alicyclic, aromatic or combinations thereof, e.g., aralkyl. Preferably, the hydrocarbyl group will be relatively free of aliphatic unsaturation, i.e., ethylenic and acetylenic, particularly acetylenic unsaturation. The substituted polyamines of the present invention are generally, but not necessarily, N-substituted polyamines. Exemplary hydrocarbyl groups and substituted hydrocarbyl groups include alkyls such as methyl, ethyl, propyl, butyl, isobutyl, pentyl, hexyl, octyl, etc., alkenyls such as propenyl, isobutenyl, hexenyl, octenyl, etc., hydroxyalkyls, such as 2-hydroxyethyl, 3-hydroxypropyl, hydroxy-isopropyl, 4-hydroxybutyl, etc., ketoalkyls, such as 2-ketopropyl, 6-ketooctyl, etc. , alkoxy and lower alkenoxy alkyls, such as ethoxyethyl, ethoxypropyl, propoxyethyl, propoxypropyl, diethyleneoxymethyl, triethyleneoxyethyl, tetraethyleneoxyethyl, diethyleneoxyhexyl, etc. The aforementioned acyl groups (C) are such as propionyl, acetyl, etc.

In a substituted polyamine, the substituents are found at any atom capable of receiving them. The substituted atoms, e.g., substituted nitrogen atoms, are generally geometrically unequivalent, and consequently the substituted amines finding use in the present invention can be mixtures of mono- and poly-substituted polyamines with substituent groups situated at equivalent and/or unequivalent atoms.

The more preferred polyamine finding use within the scope of the present invention is a polyalkylene polyamine, including alkylene diamine, and including substituted polyamines, e.g., alkyl and hydroxyalkyl-substituted polyalkylene polyamine. Preferably, the alkylene group contains from 2 to 6 carbon atoms, there being preferably from 2 to 3 carbon atoms between the nitrogen atoms. Such groups are 1 exemplified by ethylene, 1,2-propylene, 2,2-dimethyl-propylene, trimethylene, 1,3,2-hydroxypropylene, etc. Examples of such polyamines include ethylene diamine, diethylene triamine, di(trimethylene) triamine, dipropylene triamine, triethylene tetraamine, tripropylene tetraamine, tetraethylene pentamine, and pentaethylene hexamine. Such amines encompass isomers such as branched-chain polyamines and previously-mentioned substituted polyamines, including hydroxy- and hydrocarbyl-substituted polyamines. Among the polyalkylene polyamines, those containing 2-12 amino nitrogen atoms and 2-24 carbon atoms are especially preferred, and the C₂-C₃ alkylene polyamines are most 3 preferred, that is, ethylene diamine, polyethylene polyamine, propylene diamine and polypropylene polyamine, and in particular, the lower polyalkylene polyamines, e.g., ethylene diamine, dipropylene triamine, etc. Particularly preferred polyalkylene polyamines are ethylene diamine and diethylene triamine. The amine component of the polyamine may be derived from heterocyclic polyamines, heterocyclic substituted amines and substituted heterocyclic compounds, wherein the heterocycle comprises one or more 5-6 membered rings containing oxygen and/or nitrogen. Such heterocyclic rings may be saturated or unsaturated and substituted with groups selected from the aforementioned (A), (B), (C) and (D) . The heterocyclic compounds are exemplified by piperazines, such as 2-methylpiperazine, N-(2-hydroxyethyl)-piperazine, 1,2-bis-(N-piperazinyl)ethane and N,N'-bis(N-piperazinyl)piperazine, 2-methylimidazoline, 3-aminopiperidine, 3-aminopyridine, N-(3-aminopropyl)-morpholine, etc. Among the heterocyclic compounds, the piperazines are preferred.

In another embodiment, the TAN number of the bio-oil may be reduced by esterification. It has been found that bio-oil acidity can be neutralized by addition of an alcohol (30-100 % w/w) under mild heating (60-120 °C) under strong acid catalyst conditions with simultaneous water removal (20-40 % w/w). In an embodiment, the alcohol is selected from the group consisting of ethanol, propanol, butanol, hexanol heptanol and glycerol.

Esterification of the bio-oil may be carried out in combination with a drying step, e.g. azeotropic distillation or vacuum flashing and optionally a subsequent amine addition step, as described above.

In another aspect, the present invention relates to the use of a system as defined herein for the production of at least a carbonized material and a bio-oil. It has been found that the system of the present invention is suited to the production of carbonized material and bio-oil and provides an improvement in terms of energy efficiency compared to prior art systems. Furthermore, the bio-oil obtained from the system as defined herein has a increased stability compared to known bio-oils.

### Brief description of figures

Fig. 1 diagrammatically shows an overview of a system for converting biomass into fluids by means of an airstream and separating the fluids according to an embodiment of the invention.
Fig. 2 diagrammatically shows an overview of a system for enhancing the conversion of biomass into fluids by means of an oxygen enriched airstream according to an embodiment of the invention.

As shown in Fig. 1, the system comprises a conversion unit 1 comprising a first heat transfer zone 1A, a second heat transfer zone 1B, a drying zone 1C and a discharge zone 1D. The conversion unit 1 is further provided with an inlet 5 for introducing biomass, an inlet 6 for introducing an airstream, an auger 8 for removing carbonized material, having an outlet 9 to a storage container (not shown) and an outlet 10 for releasing a fluid. The system further comprises a hopper 2, provided with an inlet 3 and an auger 4 which is connected to and in open or closed communication with inlet 5 of conversion unit 1.

The outlet 10 is connected to and in open communication with a first separation unit 11, which is provided with an inlet 12, a first outlet 13, and a second outlet 14, which is connected to and in fluid communication with a second separation unit 15.

The second separation unit 15 is further provided with means for exerting centrifugal forces on the introduced fluids (not shown), a first outlet 16 and a second outlet 17, which is connected to and in fluid communication with a condensing unit 18.

The condensing unit 18 is further provided with an inlet 19, means for introducing and releasing cooling media (not shown), a first outlet 20 and a second outlet 21, which is connected to and in fluid communication with a ventilator 22, having a ventilator outlet 23, which is connected to and in fluid communication with a third separation unit 24, which is provided with a first outlet 25, and a second outlet 26, which is connected to and in fluid communication with a gas burner or engine (not shown).

Also shown in Fig. 1 is an optional drying unit (41), comprising an inlet for receiving bio-oil (42), optionally an inlet for drying additives (43) and an outlet (44) for the dried bio-oil.

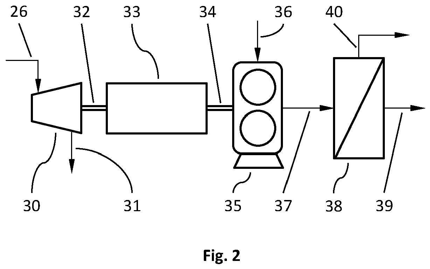

Fig. 2 shows an engine 30, which is connected to and in fluid communication with outlet 26 of separation unit 24. The engine is provided with outlet 31 and is connected to generator 33 through drive shaft 32, which is also in direct connection with compressor 35 through drive shaft 34. Compressor 35 has an inlet 36 and an outlet 37, which is connected to and in fluid communication with a membrane separation unit 38. The membrane separation unit 38 is provided with outlet 39 and outlet 40.

Pyrolysis gas, released from outlet 26 of separation unit 24, is introduced to engine 30 where it is mixed with ambient air and combusted in order to provide the energy for driving generator 33, through drive shaft 32. The formed combustion gases are released from outlet 31. The generator 33 provides electrical power to the system of the invention. In this way the system of the invention may be operated as an autonomous unit, which solely relies on the supply of biomass.

At the same time, drive shaft 34, which is in direct connection with drive shaft 32, drives compressor 35. Ambient air is introduced to inlet 36 and compressed to a first pressure level e.g.10 bars before being released from outlet 37 and introduced into membrane separation unit 38, which separates the compressed air into a first gas fraction released from outlet 39, comprising essentially pure nitrogen at a second pressure level e.g. 9,7 bars, and a second gas fraction released from outlet 40, which essentially comprises ambient air enriched with oxygen at a third pressure level e.g. approximately ambient pressure. The oxygen content of the second gas fraction is between 28% and 40%.

The present invention is hereby further exemplified by means of the following nonlimiting examples.

### Examples

### Examples

### 1.1 MATERIALS

Bio-oils produced by the pyrolysis of beech wood biomass using the process according to the present invention were used for all experiments. In the examples of section 1.2, the bio-oil is referred to as crude bio-oil. All other chemicals were analytical grade and used as commercially available.

### 1.2 METHODS

### 1.2.1 Azeotropic distillation

All distillations were carried out in a three-neck round bottom connected to a Dean-Stark trap and cooler. During distillation, pressure was ambient whilst temperature was maintained at 80-90 °C using a temperature-controlled oil bath. Iso-Octane was used as entrainer at a 1:1-4:1 oil:solvent weight ratio.

### 1.2.2 Vacuum flashing

The setup for this method comprised a four-neck resin-pot connected to a Dean-Stark trap and cooler. Dry N₂ was introduced at a constant pressure of about 0.2-0.5 bar in the oil by means of a sparger made from a perforated PE tube. During experiments, pressure was maintained at 500-800 mbar and Temperature at about 80 °C by using a vacuum pump, connected to the cooler via a cold-trap at 0 °C.

### 1.2.2 Blending experiments

Samples of known weight (about 20 g) in closed vials were first heated to 80 °C in an oven for at least 30 minutes. Known amounts of additive(s) were then weighed in, either dropwise (liquids) or with a spatula (solids) until a desired content was reached. The vials were closed, alternately heated and swirled until complete mixing was observed by visual inspection. An alternative option comprises addition of amine(s) to oil in the reaction vessel immediately after azeotropic distillation or vacuum flashing, optionally followed by restarting the process in order to remove any volatiles produced by amine addition.

### 1.2.2 Titrations

About 100-200 mg aliquots of crude oil, dried oil or oil-containing mixtures were diluted 100 fold with a 50/50 Ethanol/H₂O blend to a final weight of about 10-20 g in order to obtain 1% w/w solutions. After monitoring the pH of this solution using a pH-meter from Hanna Instruments, these solutions were further diluted with 50/50 Ethanol/H₂O to a final weight of about 40-50 g and titrated potentiometrically with 0.1 N NaOH in H₂O. Total Acid Numbers (TAN) were calculated as mg KOH/g from the amount of 0.1 N NaOH needed to reach the endpoint of the titration which was detected from the maximum of the first derivative of the titration curve, as usual.

### 1.2.3 H₂O content

Karl Fischer titration was applied to measure H₂O content of both crude and dried oil samples.

### 1.2.4 Viscosity

Viscosity measurements were carried out at 50 °C with a Brookfield type RVDV-II+ viscometer in thermostatted small sample holders using spindle type SC-4-34. After equilibrating for at least 1 hour, several readings were taken to determine the reported viscosity, including its standard deviation. The viscometer was calibrated for the 900-25000 mPa.ss range with 4 standard calibration liquids obtained from Brookfield using the standard Brookfield setup. Corrections were made for the small sample cup size, an indicated in the Brookfield handbook 'More solutions to sticky problems', 2014, page 13, section 3.4.10.

### 1.3.1 Drying by azeotropic distillation

### Example 1

398.1 g hot crude bio-oil was mixed with 129.5 g iso-Octane in a 1 ltr. three-neck round bottom as described in section 1.2.1. After distillation at 80-85 °C, a slightly yellow, transparent distillate with pH=1.64 was obtained at a yield of 33.51 g or 8.42 % of initial mass. The TAN value of the oil was reduced from 114.8 mg KOH/g for crude bio-oil to 37.6 mg KOH/g for the dried oil. The H₂O content of the dried oil was 0.3 % w/w versus 3.1 % w/w for crude bio-oil.

Comparative example 1-A: bio-oil was produced using fast pyrolysis according to WO2012027428 in a riser reactor in the presence of a kaolin catalyst. Subsequent to condensing, the bio-oil had a bound water content of 9.99 weight percent after removal of the free water phase and a TAN value of 110.14 mg KOH/g. The bio-oil (166 g) was subjected to azeotropic distillation in the presence of 40.6 g of toluene at a pressure of about 210 mmHg and a maximum temperature of 105.3°C. After azeotropic distillation, the bio-oil had a bound water content of 0.22 weight percent, a TAN value of 55.14 mg KOH/g, and was miscible with about 10 weight percent of toluene.

This result proves that azeotropic distillation of the bio-oil according to the present invention can be used to remove H₂O from pyrolysis oil while simultaneously reducing its acidity. A greater reduction in acidity is seen in the inventive method compared to that of the prior art. Addition of amine (5 or 10 % w/w monoethanolamine, MEA) leads to an even greater reduction in acidity, as shown in Table 1.

| Reduction of TAN by azeotropic distillation and amine addition | | | |
|---|---|---|---|
| | Water % w/w | TAN | % reduction TAN |
| Example 1-A (crude) | 3.1 | 114.8 | - |
| Example 1-B (after azeotroptic distillation) | 0.3 | 37.6 | 66 % |
| Example 1-B (after azeotroptic distillation + 5 % MEA) | 0.3 | 16.8 | 85 % |
| Example 1-B (after azeotroptic distillation + 10 % MEA) | 0.3 | 8.8 | 93% |
| Comparative example 1- A | 9.99 | 110 | - |
| Comparative example 1 - B | 0.22 | 55.1 | 50 % |

### 1.3.2 Drying by vacuum flashing

### Example 2

436.3 g hot crude bio-oil was introduced into a four-neck resin-pot as described in section 1.2.2. Dry N₂ was sparged into the mixture at 80 °C and 700 mbar to yield 43.7 g or 10.0 % w/w slightly yellow distillate. The dried oil had a TAN=60.1 mg KOH/g versus 114.8 mg KOH/g for crude bio-oil, showing that vacuum flashing can reduce the acid content of pyrolysis oil significantly.

### 1.3.2 Amines and Urea addition

### Introduction

Blends were made by mixing various liquid amines and urea at increasing concentration with pyrolysis oil, optionally dried by vacuum flashing or azeotropic distillation. Purpose of these experiments was to show that the TAN of pyrolysis oil can be reduced to sufficiently low levels, as required by application of the oil as eg. marine fuel. This is demonstrated by the following examples. It should be noted that measurement of TAN by titration is no longer possible beyond its stoichiometric point at pH=7.6 on average. Therefore, the initial pH value of the 1% w/w solutions used for titrations are reported in the examples too.

### Example 3

Increasing amounts of Monoethanolamine (MEA) were mixed with pyrolysis oil (crude bio-oil), as indicated in section 1.2.2. After overnight storage at 80 °C, 1% w/w solutions in 50/50 Ethanol/H₂O were prepared, their pH and TAN was measured by titration as indicated in section 1.2.2. The results in table 2 demonstrate that the acidity of pyrolysis oil can be removed completely.

**Table 2: Acidity of Pyrolysis oil (crude bio-oil) at increasing MEA content**

| %w/w MEA | Initial pH of 1% w/w solution | TAN (mgKOH/g) |
|---|---|---|
| 0,00 | 3,92 | 114,8 |
| 6,32 | 4,61 | 89,3 |
| 13,19 | 6,35 | 23,9 |
| 17,51 | 6,92 | 20,7 |
| 22,91 | 8,20 | (-) |
| 27,58 | 8,85 | (-) |

Where (-) means not measured due to no acid being present

### Example 4

The experiment of example 3 was repeated with the vacuum-flash dried crude bio-oil sample of example 2. with similar results; see table 3.

**Table 3: Acidity of vacuum-flash dried Pyrolysis oil (crude bio-oil) at increasing MEA content**

| %w/w MEA | Initial pH of 1% w/w solution | TAN (mgKOH/g) |
|---|---|---|
| 0.00 | 4,20 | 60,1 |
| 7,06 | 4,99 | 47,1 |
| 18,95 | 9,43 | (-) |
| 29,43 | 9,85 | (-) |
| 30,54 | 9,75 | (-) |
| 43,23 | 10,20 | (-) |

### Example 5

The experiment of example 4 was repeated with crude bio-oil and Diethanolamine (DEOA) instead of MEA. The results in table 4 show that the acidity of crude bio-oil can be eliminated by DEOA as well.

**Table 4: Acidity of Pyrolysis oil (crude bio-oil) at increasing DEOA content**

| %w/w DEOA | Initial pH of 1% w/w solution | TAN (mgKOH/g) |
|---|---|---|
| 0,00 | 4,16 | 98,8 |
| 10,09 | 5,50 | 50,9 |
| 20,09 | 6,59 | 8,8 |

### Example 6

The experiment of example 4 was repeated with crude bio-oil and Diethylamine (DEA) instead of MEA. The results in table 5 show that the acidity of crude bio-oil can be eliminated by DEA as well.

**Table 5: Acidity of Pyrolysis oil (crude bio-oil) at increasing DEA content**

| %w/w DEA | Initial pH of 1% w/w solution | TAN (mgKOH/g) |
|---|---|---|
| 0,00 | 4,16 | 98,8 |
| 10,17 | 6,20 | 25,4 |
| 12,00 | 6,61 | 16,2 |
| 12,99 | 9,82 | (-) |
| 13,99 | 10,32 | (-) |
| 20,12 | 9,31 | (-) |
| 25,39 | 10,15 | (-) |

### Example 7

The experiment of example 4 was repeated with crude bio-oil and urea instead of MEA. The results in table 6 show that the acidity of crude bio-oil can be eliminated by Urea as well.

**Table 6: Acidity of Pyrolysis oil (crude bio-oil) at increasing Urea content**

| %w/w Urea | Initial pH of 1% w/w solution | TAN (mgKOH/g) |
|---|---|---|
| 0,00 | 4,16 | 98,8 |
| 9,44 | 4,91 | 61,6 |
| 15,03 | 5,38 | 46,1 |
| 19,28 | 5,76 | 33,8 |
| 23,01 | 5,90 | 27,2 |
| 26,81 | 6,04 | 24,3 |

### Example 8

The experiment of example 4 was repeated with crude bio-oil and Triethylamine (TEA) instead of MEA. The results in table 7 show that the acidity of crude bio-oil can be eliminated by TEA as well.

**Table 7: Acidity of Pyrolysis oil (crude bio-oil) at increasing TEA content**

| %w/w TEA | Initial pH of 1% w/w solution | TAN (mgKOH/g) |
|---|---|---|
| 0,00 | 4,16 | 98,8 |
| 10,19 | 5,66 | 47,7 |
| 20,02 | 8,41 | - |

### Example 9

Liner regression analysis was applied to establish a quantitative relationship between TAN and initial pH for all samples with pH values below the stoichiometric point, including the 'virgin'oil samples without amines . The resulting regression equation reads:
TAN = -28.55*pH + 204.5 with N = 23, R = 0.91, S.E. = 12, F = 101
where N, R, S.E. and F represent: number of observations, correlation coefficient, standard error of estimate and Fisher's variance ratio, respectively. Figure 1 shows this equation in graphical form. It is concluded that the initial pH gives a good indication of the TAN that is otherwise difficult to measure using the rather time consuming titration technique.

### Example 13

The impact of amine addition on the properties of pyrolysis oil is very clear from the viscosity data given by table 8. The more than 5-fold increase in crude bio-oil viscosity upon addition of amines strongly suggests that additional reactions beyond simple acid-base neutralisation have occurred. The strong dependence of all viscosities measured on Temperature furthermore demonstrates that amine-modified oils should be manageable by applying elevated Temperature during handling in practice.

**Table 8: Viscosities of Amine-modified Pyrolysis oil (crude bio-oil)**

| Sample ID | %w/w Amine | Temperature of measurement (°C) | Viscosity (mPa.s) |
|---|---|---|---|
| crude 2 | | | 775 |
| crude bio-oil + MEA | 14.24 | 50 | 6970 |
| crude bio-oil + MEA | 14.24 | 60 | 3370 |
| crude bio-oil + MEA | 14.24 | 70 | 1824 |
| crude bio-oil + DEOA | 20.09 | 50 | 9829 |
| crude bio-oil + DEOA | 20.09 | 60 | 3823 |
| crude bio-oil + DEA | 12.00 | 40 | 13705 |
| crude bio-oil + DEA | 12.00 | 50 | 5379 |
| crude bio-oil + DEA | 12.00 | 60 | 2199 |
| crude bio-oil + DEA | 12.00 | 70 | 1020 |

### Example 14

Stability of crude bio-oil was measured by recording viscosities of samples aged at 90 °C as a function of time up to 48 hours. The best-fitting equation of the viscosity vs time (in hours) plot obtained by linear regression reads as follows:
Viscosity (mPa.s) = 8.82*Time (hours) + 825 with R² = 0.999 F = 2047 st.er. = 6.6
where R², F and st.er. represent the correlation coefficient squared, Fisher's variance ration and standard error of estimate, respectively. 95 % confidence levels of the slope being 7.98 and 9.66, this result indicate that crude bio-oil of the present invention is a highly stable oil. The (average) stability of a sample of crude bio-oil according to the present invention is therefore (7.98+9.66)/2 = 8.82 mPa.s/h, ie. Highly stable.

### Example 15

### Pyroligneous acid

Pyroligneous acid produced simultaneously with the bio-oil used in examples 1-13 was analysed for its chemical composition using infrared spectroscopy and gas chromatography.

Near-infrared (NIR) were recorded on an Antaris NIR-Analyser from ThermoNicolet with pyroligneous acid samples dissolved in THF solution using 1 cm cuvets. The method compared the absorbance at 7035 cm⁻¹ of H₂O in the samples with that of a series of THF-H₂O mixtures of known composition that were used to construct a calibration plot.

All GC-TOFMS experiments were performed on an Agilent technologies 6890GC equipped with a PTV injector containing a baffled liner and the JEOL Time-of-Flight Mass Spectrometer (JMS GCv-100). GC analyses were performed on an Agilent 25m x 0.25mm i.d. CP-Wax 58 (FFAP) CB column with a film thickness of 0.20µm (Part no. CP7717).

For the GC-HRTOFMS characterization of the Wood acid and oil sample a programmed oven temperature was used. The GC oven was programmed from 50°C (2 min. initial) to a final temperature of 275°C (5.50 min.) at a programming rate of 6°C/min. The total GC run time is 45 minutes.

The Time-of-Flight detector was operated in electron impact mode and scanned over the mass range of 19-800 amu.

**Table 9: Composition of pyroligneous acid prepared using the method of the present invention**

| **Quantitative: Component** | **% w/w** | **Measurement technique** |
|---|---|---|
| H₂O | 75.4 | NIR-peak at 7035 cm-1 of solution in THF |
| Acetic Acid | 6.8 | GC with calibration |
| Formic Acid | 2.2 | By subtraction of TAN=90.59 mg KOH/g and % w/w Acetic acid from GC (no other acids) |
| Hydroxyacetone | 2.0 | GC with calibration |
| 'Phenolic' Rest | 13.6 | By subtraction from GC chromatogram |

A typical pyroligneous acid as the result of the pyrolysis of wood has a composition of 80-90 % water and 10-20 % organic content. As can be seen by the quantitative analysis in Table 9, the pyroligneous acid of the present invention has an increased total organic content of circa 25 %. The increased organic content makes the pyroligneous acid of the present invention an improved source of chemical compounds which can be extracted and purified or used in further transformations in the preparation of adhesives, coatings and speciality chemicals.

### Example 16

### Biochar

Properties of biochar produced simultaneously with the bio-oil of examples 1-13 was analysed. (after grinding using a commercially available, high shear grinding device, as is well known to the skilled person).

Particle size distribution was determined using Laser Light Scattering (LLS) Malvern Mastersizer 2000 (Samples were cut to size, ultratoming at -120°C Staining : 6.5 min OsO4 ; 6.5 min RuO₄.
The results show a broad distribution peak having a maximum at 500-600 µm. Average mean volume diameter was found to be 360 µm.
Surface area according to the Brunauer-Emmett-Teller (BET) method was measured according to ASTM (2016) method nr. D16556-16 on a Micromiretics instrument. Brunauer-Emmett-Teller (BET) = N2 multilayer adsorption measured as a function of relative pressure. - BET surface area = 170 m²/g.
Thermogravimetric analysis (TGA) was performed on a Discovery TGA from TA Instruments under a N₂ flow of 25 ml/min at a heating rate of 20 °C/min from 30-1000 °C.

ThermoGravimetricAnalysis (TGA) shows a gradual Wt. loss of 7.0% up to 950 °C. Thermal desorption GC/MS up to 320 °C shows mainly release of water in addition to very small quantities of volatile aromatics.
Elemental analysis gave C:N:H of 80.8:0.4:2.0;

## Claims

1. System for converting biomass, the system comprising:
A) a conversion unit (1) provided with an inlet (5) for introducing biomass, an inlet (6) for introducing a gas stream, an outlet (8) for removing carbonized material (9), and an outlet (10) for releasing a third fluid (F3), said conversion unit comprising:
- a first heat transfer zone (1A) for heating the gas stream by direct contact between the gas stream and carbonized biomass having a first temperature level (CT1), resulting in the at least partial combustion thereof and a first fluid (F1) having a first temperature level (T1);
- a second heat transfer zone (1B) for heating dried biomass by direct contact between the first fluid (F1) having a first temperature level (T1) and the dried biomass, resulting in the at least partial conversion thereof and the release of a second fluid (F2) having a second temperature level (T2);
- a drying zone (1C) for drying a fresh biomass by direct contact between the second fluid (F2) having a second temperature level (T2) and the fresh biomass, resulting in a dried biomass and the release of a third fluid (F3) having a third temperature level (T3),
- a discharge zone (1D) provided with outlet (8) for continuously removing carbonized material (9),
said system further comprising:
B) a first separation unit (11), for separating solids and tar from the third fluid (F3) by direct contact between the third fluid (F3) and a first liquid, resulting in a fourth outlet fluid (F4) having a fourth outlet temperature level (T4) and a first outlet fraction (FR1), comprising essentially tar and solids;
C) a second separation unit (15) for separating an oil from the fourth outlet fluid (F4) by subjecting same to centrifugal forces, resulting in a fifth outlet fluid (F5) having a fifth outlet temperature level (T5) and a second outlet fraction (FR2) essentially comprising an oil;
wherein the second separation unit (15) comprises at least one horizontal rotatable disk comprising at least one blade extending at least partly from the periphery towards the centre of the disk, whereby the intersection of blade and disk is at an angle with the disk radius of between 0 and 180 degrees, and extending at least partly from the disk in vertical direction, whereby the line extending from the peripheral intersection of blade and disk in a direction perpendicular to the blade is at an angle with the horizontal plane of between 0 and 90 degrees, wherein preferably the second separation unit (15) comprises one or multiple sequential units wherein the outlet temperature of the last unit equals the fifth temperature level and the inlet temperature of the first unit equals the fourth temperature level in order to separate the second fraction in one or multiple sub-fractions;
D) condensing unit (18), for condensing and separating residual liquids from the fifth outlet fluid (F5) by direct contact between the fifth outlet fluid (F5) and a second liquid and indirect contact with a cooling medium, resulting in a sixth outlet fluid (F6) having a sixth temperature level (T6) and a third fraction (FR3), essentially comprising a mixture of water and acids.

2. System according to Claim 1, wherein the system is provided with a heat exchanger for preheating the gas stream prior to introducing the gas stream to the first heat transfer zone (1A).

3. System according to any one of the previous claims, wherein the system comprises a ventilator (22) for creating a gas stream, the ventilator being located downstream relative to the condensing unit (18).

4. System according to one any one of the previous claims, wherein the system comprises a third separation unit (24) for separating residual liquids from the sixth fluid, resulting in a gas stream and a fourth fraction, essentially comprising a mixture of oil and water.

5. System according to any one of the previous claims, the system further comprising:
- an engine (30), for converting a pyrolysis gas to mechanical power;
- a generator (33), for converting the mechanical power provided by the engine (30) through a first drive shaft (32) into electrical power;
- a compressor (35), for compressing ambient air to a first pressure level, using mechanical power provided by the engine (30) through a second drive shaft (34), which is directly connected to the first drive shaft (32);
- a membrane separation unit (38), for separating the compressed air having a first pressure level into a first gas fraction, comprising essentially pure nitrogen at a second pressure level, and a second gas fraction, comprising ambient air having an increased oxygen level and a third pressure level.

6. System according to any one of the previous claims, further comprising a drying unit (41), said drying unit comprising an inlet for bio-oil (42), optionally an inlet for drying additives (43) and an outlet (44) for the dried bio-oil.

7. Method for converting biomass into carbonized material and fluids, the method comprising the steps of:
i) heating a gas stream, preferably ambient air, by direct contact in a first heat transfer zone (1A) in a conversion reactor between the gas stream and carbonized biomass having a first temperature level (CT1), resulting in the at least partial combustion thereof and a first fluid (F1) having a first temperature level (T1);
ii) heating dried biomass by direct contact in a second heat transfer zone (1B) between the first fluid (F1) having a first temperature level (T1) and the dried biomass, resulting in the at least partial conversion thereof and the release of a second fluid (F2) having a second temperature level (T2);
iii) drying fresh biomass by direct contact in a drying zone (1C) between the second fluid (F2) having a second temperature level (T2) and the fresh biomass, resulting in a dried biomass and the release of a third fluid (F3) having a third temperature level (T3),
iv) continuously removing carbonized biomass from a discharge zone (1D),
v) continuously providing the third fluid (F3) released from outlet (10) of conversion unit (1) to the first separation unit (11) to provide a fourth fluid (F4) and a first fraction (FR1) being essentially tar and solids, wherein a first liquid, preferably water, more preferably water spray, is introduced to inlet (12), which liquid cools said fluids and gases to a first temperature level in order to remove solid and/or tar particles which may have formed during the preceding thermal conversion and which may have been entrained in the third fluid, and
vi) introducing the fourth fluid (F4) to the second separation unit 15, wherein the fourth fluid is subjected to centrifugal forces to provide a second fraction comprising bio-oil having a water content of less than 5 % w/w and a fifth fluid (F5) having a fifth temperature level (T5), wherein the second separation unit (15) comprises at least one horizontal rotatable disk comprising at least one blade extending at least partly from the periphery towards the centre of the disk, whereby the intersection of blade and disk is at an angle with the disk radius of between 0 and 180 degrees, and extending at least partly from the disk in vertical direction, whereby the line extending from the peripheral intersection of blade and disk in a direction perpendicular to the blade is at an angle with the horizontal plane of between 0 and 90 degrees.

8. Method according to claim 7, further comprising the step vii) of condensing and separating residual liquids from the fifth fluid (F5) by direct contact between the fifth fluid (F5) and a second liquid, said second liquid preferably at least partly comprising the first fraction (FR1) collected from the first separation unit (11), and indirect contact with a cooling medium in a condensing unit (18), resulting in a sixth fluid (F6) having a sixth temperature level (T6) and a third fraction (FR3) comprising a mixture of water and acids;
wherein, preferably, the biomass is selected from the group of wood, energy crops, agricultural residues, food waste, post-consumer waste and industrial waste, more preferably wood.

9. Method according to any of the claims 7 or 8, wherein the cooling medium is water or ambient air.

10. Method according to any of the claims 7-9, further comprising the step viii) of subjecting the bio-oil obtained in step vii) to a drying step to provide a bio-oil having a water content of less than 1 % w/w; wherein preferably step vii) is carried out in the presence of an amine, selected from the group consisting of ammonia, primary, secondary and tertiary amines.

11. Method according to any of the claims 7-10, wherein the carbonized material (9) has a carbon content of between 70 and 100 % by weight based on the dried mass of the carbonized material, preferably between 80 and 90 % by weight based on the dried mass of the carbonized material (9).

12. Method according to any of the claims 8-11, wherein said acids are pyroligneous acids (FR3) having a water content of between 70 and 90 % w/w and an oxygenated hydrocarbon content of between 30 and 10 % w/w.

13. Method according to any one or more of claims 8-12, wherein gas emitted from the conversion unit is collected and supplied to a burner to be used as energy generation for the pyrolysis reactor.

14. Use of the system according to claims 1-6 for carrying out the method of claims 7-13.

15. Use of a system according to any one or more of claims 1-6 for the production of at least a carbonized material and a bio-oil.

## Patentansprüche

1. System zur Umwandlung von Biomasse, das System umfassend:
A) eine Umwandlungseinheit (1), versehen mit einem Einlass (5) zum Einbringen von Biomasse, einem Einlass (6) zum Einbringen eines Gasstroms, einem Auslass (8) zum Entnehmen von verkohltem Material (9) und einem Auslass (10) zum Freisetzen einer dritten Flüssigkeit (F3), wobei die Umwandlungseinheit umfasst:
- eine erste Hitzeübertragungszone (1A) zum Erhitzen des Gasstroms durch direkten Kontakt zwischen dem Gasstrom und der verkohlten Biomasse, die ein erstes Temperaturniveau (CT1) aufweist, resultierend in der mindestens teilweisen Verbrennung davon und einer ersten Flüssigkeit (F1), die ein erstes Temperaturniveau (T1) aufweist;
- eine zweite Hitzeübertragungszone (1B) zum Erhitzen getrocknete Biomasse durch direkten Kontakt zwischen der ersten Flüssigkeit (F1), die ein erstes Temperaturniveau (T1) aufweist, und der getrockneten Biomasse, resultierend in der mindestens teilweisen Umwandlung davon und der Freisetzung einer zweiten Flüssigkeit (F2), die ein zweites Temperaturniveau (T2) aufweist;
- eine Trocknungszone (1C) zum Trocknen einer frischen Biomasse durch direkten Kontakt zwischen der zweiten Flüssigkeit (F2), die ein zweites Temperaturniveau (T2) aufweist, und der frischen Biomasse, resultierend in einer getrockneten Biomasse und der Freisetzung einer dritten Flüssigkeit (F3), die ein drittes Temperaturniveau (T3) aufweist,
- eine Abführungszone (1D), die mit einem Auslass (8) zum kontinuierlichen Entnehmen des verkohlten Materials (9) versehen ist,
wobei das System ferner umfasst:
B) eine erste Trenneinheit (11) zum Trennen von Feststoffen und Teer aus der dritten Flüssigkeit (F3) durch direkten Kontakt zwischen der dritten Flüssigkeit (F3) und einer ersten Flüssigkeit, resultierend in einer vierten Auslassflüssigkeit (F4), die ein viertes Auslasstemperaturniveau (T4) aufweist, und einer ersten Auslassfraktion (FR1), die im Wesentlichen Teer und Feststoffe umfasst;
C) eine zweite Trenneinheit (15) zum Trennen eines Öls aus der vierten Auslassflüssigkeit (F4), indem selbige Zentrifugalkräften ausgesetzt wird, resultierend in einer fünften Auslassflüssigkeit (F5), die ein fünftes Auslasstemperaturniveau (T5) aufweist, und einer zweiten Auslassfraktion (FR2), die im Wesentlichen ein Öl umfasst;
wobei die zweite Trenneinheit (15) mindestens eine horizontale drehbare Scheibe umfasst, die mindestens eine Klinge umfasst, welche sich mindestens teilweise vom Umfang zum Mittelpunkt der Scheibe hin erstreckt, wobei sich der Schnittbereich zwischen Klinge und Scheibe in einem Winkel zwischen 0 und 180 Grad in Bezug auf den Scheibenradius befindet, und sich mindestens teilweise von der Scheibe in vertikaler Richtung erstreckt, wobei die Linie, die sich vom Umfangsschnittpunkt der Klinge und der Scheibe in einer Richtung senkrecht zu der Klinge erstreckt, sich in einem Winkel zwischen 0 und 90 Grad zu der Horizontalebene befindet, und wobei die zweite Trenneinheit (15) bevorzugt eine oder mehrere sequentielle Einheiten umfasst, wobei die Auslasstemperatur der letzten Einheit gleich dem fünften Temperaturniveau und die Einlasstemperatur der ersten Einheit gleich dem vierten Temperaturniveau ist, um die zweite Fraktion in eine oder mehrere Unterfraktionen zu trennen;
D) eine Kondensationseinheit (18) zum Kondensieren und Trennen der Restflüssigkeiten aus der fünften Auslassflüssigkeit (F5) durch direkten Kontakt zwischen der fünften Auslassflüssigkeit (F5) und einer zweiten Flüssigkeit und indirekten Kontakt mit einem Kühlmedium, resultierend in einer sechsten Auslassflüssigkeit (F6), die ein sechstes Temperaturniveau (T6) aufweist, und einer dritten Fraktion (FR3), die im Wesentlichen ein Gemisch aus Wasser und Säuren umfasst.

2. System nach Anspruch 1, wobei das System mit einem Wärmetauscher zum Vorheizen des Gasstroms vor dem Einbringen des Gasstroms in die erste Hitzeübertragungszone (1A) versehen ist.

3. System nach einem der vorhergehenden Ansprüche, wobei das System einen Ventilator (22) zum Erzeugen eines Gasstroms umfasst und der Ventilator stromabwärts in Bezug auf die Kondensationseinheit (18) angeordnet ist.

4. System nach einem der vorhergehenden Ansprüche, wobei das System eine dritte Trenneinheit (24) zum Trennen der Restflüssigkeiten aus der sechsten Flüssigkeit umfasst, resultierend in einem Gasstrom und einer vierten Fraktion, die im Wesentlichen ein Gemisch aus Öl und Wasser umfasst.

5. System nach einem der vorhergehenden Ansprüche, wobei das System ferner umfasst:
- einen Motor (30) zum Umwandeln eines Pyrolysegases in mechanische Leistung;
- einen Generator (33) zum Umwandeln der mechanischen Leistung, die von dem Motor (30) bereitgestellt wird, in elektrische Leistung durch eine erste Antriebswelle (32);
- einen Kompressor (35) zum Komprimieren der Umgebungsluft auf ein erstes Druckniveau unter Verwendung mechanischer Leistung, die von dem Motor (30) bereitgestellt wird, durch eine zweite Antriebswelle (34), welche direkt mit der ersten Antriebswelle (32) verbunden ist;
- eine Membrantrenneinheit (38) zum Trennen der komprimierten Luft, die ein erstes Druckniveau aufweist, in eine erste Gasfraktion, die im Wesentlichen reinen Stickstoff auf einem zweiten Druckniveau umfasst, und in eine zweite Gasfraktion, die Umgebungsluft umfasst, welche ein erhöhtes Sauerstoffniveau und ein drittes Druckniveau aufweist.

6. System nach einem der vorhergehenden Ansprüche, ferner umfassend eine Trocknungseinheit (41), wobei die Trocknungseinheit einen Einlass für Bioöl (42), optional einen Einlass für Trocknungszusätze (43) und einen Auslass (44) für das getrocknete Bioöl umfasst.

7. Verfahren zur Umwandlung einer Biomasse in verkohltes Material und Flüssigkeiten, wobei das Verfahren die folgenden Schritte umfasst:
i) Erhitzen eines Gasstroms, bevorzugt Umgebungsluft, durch direkten Kontakt in einer ersten Hitzeübertragungszone (1A) in einem Umwandlungsreaktor zwischen dem Gasstrom und der verkohlten Biomasse, die ein erstes Temperaturniveau (CT1) aufweist, resultierend in der mindestens teilweisen Verbrennung davon und einer ersten Flüssigkeit (F1), die ein erstes Temperaturniveau (T1) aufweist;
ii) Erhitzen der getrockneten Biomasse durch direkten Kontakt in einer zweiten Hitzeübertragungszone (1B) zwischen der ersten Flüssigkeit (F1), die ein erstes Temperaturniveau (T1) aufweist, und der getrockneten Biomasse, resultierend in der mindestens teilweisen Umwandlung davon sowie der Freisetzung einer zweiten Flüssigkeit (F2), die ein zweites Temperaturniveau (T2) aufweist;
iii) Trocknen der frischen Biomasse durch direkten Kontakt in einer Trocknungszone (1C) zwischen der zweiten Flüssigkeit (F2), die ein zweites Temperaturniveau (T2) aufweist, und der frischen Biomasse, resultierend in einer getrockneten Biomasse und der Freisetzung eine dritten Flüssigkeit (F3), die ein drittes Temperaturniveau (T3) aufweist;
iv) kontinuierliches Entnehmen von verkohlter Biomasse aus einer Abführungszone (1D);
v) kontinuierliches Bereitstellen der dritten Flüssigkeit (F3), die aus dem Auslass (10) der Umwandlungseinheit (1) freigesetzt wird, an die erste Trenneinheit (11), um eine vierte Flüssigkeit (F4) und eine erste Fraktion (FR1) bereitzustellen, bei der es sich im Wesentlichen um Teer und Feststoffe handelt, wobei eine erste Flüssigkeit, bevorzugt Wasser, stärker bevorzugt ein Wassersprühstrahl, in den Einlass (12) eingebracht wird, dessen Flüssigkeit die Flüssigkeiten und Gase auf ein erstes Temperaturniveau abkühlt, um Feststoff- und/oder Teerpartikel zu entnehmen, die sich während der vorangegangenen thermischen Umwandlung gebildet haben können, und möglicherweise in die dritte Flüssigkeit eingetragen worden sind, sowie
vi) Einbringen der vierten Flüssigkeit (F4) in die zweite Trenneinheit 15, wobei die vierte Flüssigkeit Zentrifugalkräften ausgesetzt wird, um eine zweite Fraktion bereitzustellen, die Bioöl, das einen Wassergehalt von weniger als 5 % w/w aufweist, und eine fünfte Flüssigkeit (F5) umfasst, die ein fünftes Temperaturniveau (T5) aufweist, wobei die zweite Trenneinheit (15) mindestens eine horizontale drehbare Scheibe umfasst, die mindestens eine Klinge umfasst, welche sich mindestens teilweise vom Umfang zum Mittelpunkt der Scheibe hin erstreckt, wobei sich der Schnittbereich zwischen Klinge und Scheibe in einem Winkel zwischen 0 und 180 Grad in Bezug auf den Scheibenradius befindet, und sich mindestens teilweise von der Scheibe in vertikaler Richtung erstreckt, wobei die Linie, die sich vom Umfangsschnittpunkt der Klinge und der Scheibe in einer Richtung senkrecht zu der Klinge erstreckt, sich in einem Winkel zwischen 0 und 90 Grad zu der Horizontalebene befindet.

8. Verfahren nach Anspruch 7, ferner umfassend den Schritt vii) des Kondensierens und Trennens von Restflüssigkeiten aus der fünften Flüssigkeit (F5) durch direkten Kontakt zwischen der fünften Flüssigkeit (F5) und einer zweiten Flüssigkeit, wobei die zweite Flüssigkeit bevorzugt mindestens teilweise die erste Fraktion (FR1) umfasst, die aus der ersten Trenneinheit (11) erfasst wird, und indirekten Kontakt mit einem Kühlmedium in einer Kondensationseinheit (18), resultierend in einer sechsten Flüssigkeit (F6), die ein sechstes Temperaturniveau (T6) aufweist, und einer dritten Fraktion (FR3), die ein Gemisch aus Wasser und Säuren umfasst;
wobei die Biomasse bevorzugt aus der Gruppe von Holz, Energiepflanzen, landwirtschaftlichen Rückständen, Speiseresten, Nach-Gebrauchsabfällen und Industrieabfällen ausgewählt wird, und, stärker bevorzugt, Holz ist.

9. Verfahren nach einem der Ansprüche 7 oder 8, wobei das Kühlmedium Wasser oder Umgebungsluft ist.

10. Verfahren nach einem der Ansprüche 7 bis 9, ferner umfassend den Schritt viii) des Aussetzens des im Schritt vii) gewonnenen Bioöls gegenüber einem Trocknungsschritt, um ein Bioöl bereitzustellen, das einen Wassergehalt von weniger als 1 % w/w aufweist; wobei bevorzugt Schritt vii) in der Anwesenheit eines Amins durchgeführt wird, das aus der Gruppe, bestehend aus Ammoniak und Primär-, Sekundär- und Tertiäraminen, ausgewählt wird.

11. Verfahren nach einem der Ansprüche 7 bis 10, wobei das verkohlte Material (9) einen Kohlenstoffgehalt zwischen 70 und 100 Gewichtsprozent auf der Grundlage der getrockneten Masse des verkohlten Materials, bevorzugt zwischen 80 und 90 Gewichtsprozent auf der Grundlage der getrockneten Masse des verkohlten Materials (9), aufweist.

12. Verfahren nach einem der Ansprüche 8 bis 11, wobei die Säuren Holzessigsäuren (FR3) sind, die einen Wassergehalt zwischen 70 und 90 % w/w und einen Anteil an sauerstoffangereicherten Kohlenwasserstoffen zwischen 30 und 10 % w/w aufweisen.

13. Verfahren nach einem oder mehreren der Ansprüche 8 bis 12, wobei das aus der Umwandlungseinheit emittierte Gas erfasst und einem Brenner zugeführt wird, um zur Energiegewinnung für den Pyrolysereaktor verwendet zu werden.

14. Verwendung des Systems nach Anspruch 1 bis 6 zum Durchführen des Verfahrens nach Anspruch 7 bis 13.

15. Verwendung eines Systems nach einem oder mehreren der Ansprüche 1 bis 6 für die Produktion von mindestens einem verkohlten Material und einem Bioöl.

## Revendications

1. Système de conversion de biomasse, le système comprenant :
A) une unité de conversion (1) munie d'une entrée (5) pour introduire une biomasse, d'une entrée (6) pour introduire un flux de gaz, d'une sortie (8) pour éliminer un matériau carbonisé (9) et d'une sortie (10) pour libérer un troisième fluide (F3), ladite unité de conversion comprenant :
- une première zone de transfert de chaleur (1A) pour chauffer le flux de gaz par contact direct entre le flux de gaz et la biomasse carbonisée ayant un premier niveau de température (CT1), ce qui permet d'entraîner sa combustion au moins partielle et d'obtenir un premier fluide (F1) ayant un premier niveau de température (T1) ;
- une deuxième zone de transfert de chaleur (1B) pour chauffer la biomasse séchée par contact direct entre le premier fluide (F1) ayant un premier niveau de température (T1) et la biomasse séchée, ce qui permet d'entraîner sa conversion au moins partielle et la libération d'un deuxième fluide (F2) ayant un deuxième niveau de température (T2) ;
- une zone de séchage (1C) pour sécher une biomasse fraîche par contact direct entre le deuxième fluide (F2) ayant un deuxième niveau de température (T2) et la biomasse fraîche, ce qui permet d'obtenir une biomasse séchée et d'entraîner la libération d'un troisième fluide (F3) ayant un troisième niveau de température (T3),
- une zone de décharge (1D) munie d'une sortie (8) pour éliminer en continu un matériau carbonisé (9),
ledit système comprenant en outre :
B) une première unité de séparation (11) pour séparer les solides et le goudron du troisième fluide (F3) par contact direct entre le troisième fluide (F3) et un premier liquide, ce qui permet d'obtenir un quatrième fluide de sortie (F4) ayant un quatrième niveau de température de sortie (T4) et une première fraction de sortie (FR1), comprenant essentiellement du goudron et des solides ;
C) une deuxième unité de séparation (15) pour séparer une huile du quatrième fluide de sortie (F4) en le soumettant à des forces centrifuges, ce qui permet d'obtenir un cinquième fluide de sortie (F5) ayant un cinquième niveau de température de sortie (T5) et une deuxième fraction de sortie (FR2) comprenant essentiellement une huile ;
où la deuxième unité de séparation (15) comprend au moins un disque rotatif horizontal comprenant au moins une lame s'étendant au moins partiellement à partir de la périphérie vers le centre du disque, moyennant quoi l'intersection de la lame et du disque forme un angle avec le rayon du disque compris entre 0 et 180 degrés, et s'étendant au moins partiellement à partir du disque dans la direction verticale, moyennant quoi la ligne s'étendant de l'intersection périphérique de la lame et du disque dans une direction perpendiculaire à la lame forme un angle avec le plan horizontal compris entre 0 et 90 degrés, où de préférence la deuxième unité de séparation (15) comprend une ou plusieurs unité(s) séquentielle(s) où la température de sortie de la dernière unité est égale au cinquième niveau de température et la température d'entrée de la première unité est égale au quatrième niveau de température afin de séparer la deuxième fraction en une ou plusieurs sous-fraction(s) ;
D) une unité de condensation (18) pour condenser et séparer des liquides résiduels du cinquième fluide de sortie (F5) par contact direct entre le cinquième fluide de sortie (F5) et un deuxième liquide et par contact indirect avec un agent de refroidissement, ce qui permet d'obtenir un sixième fluide de sortie (F6) ayant un sixième niveau de température (T6) et une troisième fraction (FR3), comprenant essentiellement un mélange d'eau et d'acides.

2. Système selon la revendication 1, dans lequel le système est muni d'un échangeur de chaleur pour préchauffer le flux de gaz avant d'introduire le flux de gaz dans la première zone de transfert de chaleur (1A).

3. Système selon l'une quelconque des revendications précédentes, dans lequel le système comprend un ventilateur (22) pour créer un flux de gaz, le ventilateur étant situé en aval par rapport à l'unité de condensation (18).

4. Système selon l'une quelconque des revendications précédentes, dans lequel le système comprend une troisième unité de séparation (24) pour séparer des liquides résiduels du sixième fluide, ce qui permet d'obtenir un flux de gaz et une quatrième fraction, comprenant essentiellement un mélange d'huile et d'eau.

5. Système selon l'une quelconque des revendications précédentes, le système comprenant en outre :
- un moteur (30) pour convertir un gaz de pyrolyse en une puissance mécanique ;
- un générateur (33) pour convertir la puissance mécanique fournie par le moteur (30) par l'intermédiaire d'un premier arbre d'entraînement (32) en une puissance électrique ;
- un compresseur (35) pour comprimer de l'air ambiant jusqu'à un premier niveau de pression, en utilisant la puissance mécanique fournie par le moteur (30) par l'intermédiaire d'un deuxième arbre d'entraînement (34), qui est directement relié au premier arbre d'entraînement (32) ;
- une unité de séparation à membrane (38) pour séparer l'air comprimé ayant un premier niveau de pression en une première fraction de gaz, comprenant essentiellement de l'azote pur à un deuxième niveau de pression et une deuxième fraction de gaz, comprenant de l'air ambiant ayant un niveau d'oxygène accru et un troisième niveau de pression.

6. Système selon l'une quelconque des revendications précédentes, comprenant en outre une unité de séchage (41), ladite unité de séchage comprenant une entrée pour bio-huile (42), éventuellement une entrée pour adjuvants de séchage (43) et une sortie (44) pour la bio-huile séchée.

7. Procédé de conversion d'une biomasse en un matériau carbonisé et des fluides, comprenant les étapes consistant :
i) à chauffer un flux de gaz, de préférence de l'air ambiant, par contact direct dans une première zone de transfert de chaleur (A) dans un réacteur de conversion entre le flux de gaz et la biomasse carbonisée ayant un premier niveau de température (CT1), ce qui permet d'entraîner sa combustion au moins partielle et d'obtenir un premier fluide (F1) ayant un premier niveau de température (T1) ;
ii) à chauffer la biomasse séchée par contact direct dans une deuxième zone de transfert de chaleur (1B) entre le premier fluide (F1) ayant un premier niveau de température (T1) et la biomasse séchée, ce qui permet d'entraîner sa conversion au moins partielle et la libération d'un deuxième fluide (F2) ayant un deuxième niveau de température (T2) ;
iii) à sécher la biomasse fraîche par contact direct dans une zone de séchage (1C) entre le deuxième fluide (F2) ayant un deuxième niveau de température (T2) et la biomasse fraîche, ce qui permet d'obtenir une biomasse séchée et d'entraîner la libération d'un troisième fluide (F3) ayant un troisième niveau de température (T3),
iv) à éliminer en continu la biomasse carbonisée d'une zone de décharge (1D),
v) à fournir en continu le troisième fluide (F3) libéré de la sortie (10) de l'unité de conversion (1) à la première unité de séparation (11) pour fournir un quatrième fluide (F4) et une première fraction (FR1) étant essentiellement du goudron et des solides, où un premier liquide, de préférence de l'eau, plus préférablement de l'eau pulvérisée, est introduit dans l'entrée (12), lequel liquide refroidit lesdits fluides et gaz à un premier niveau de température afin d'éliminer les particules solides et/ou de goudron qui ont pu se former lors de la conversion thermique précédente et susceptibles d'avoir été entraînées dans le troisième fluide, et
vi) à introduire le quatrième fluide (F4) dans la deuxième unité de séparation (15), où le quatrième fluide est soumis à des forces centrifuges pour fournir une deuxième fraction comprenant de la bio-huile ayant une teneur en eau inférieure à 5% p/p et un cinquième fluide (F5) ayant un cinquième niveau de température (T5), où la deuxième unité de séparation (15) comprend au moins un disque rotatif horizontal comprenant au moins une lame s'étendant au moins partiellement à partir de la périphérie vers le centre du disque, moyennant quoi l'intersection de la lame et du disque forme un angle avec le rayon du disque compris entre 0 et 180 degrés, et s'étendant au moins partiellement à partir du disque dans la direction verticale, moyennant quoi la ligne s'étendant de l'intersection périphérique de la lame et du disque dans une direction perpendiculaire à la lame forme un angle avec le plan horizontal compris entre 0 et 90 degrés.

8. Procédé selon la revendication 7, comprenant en outre l'étape vii) consistant à condenser et à séparer des liquides résiduels du cinquième fluide (F5) par contact direct entre le cinquième fluide (F5) et un deuxième liquide, ledit deuxième liquide comprenant de préférence au moins partiellement la première fraction (FR1) collectée à partir de la première unité de séparation (11) et par contact indirect avec un agent de refroidissement dans une unité de condensation (18), ce qui permet d'obtenir un sixième fluide (F6) ayant un sixième niveau de température (T6) et une troisième fraction (FR3) comprenant un mélange d'eau et d'acides ;
où, de préférence, la biomasse est choisie dans le groupe constitué de bois, de plantes énergétiques, de résidus agricoles, de déchets alimentaires, de déchets post-consommation et de déchets industriels, plus préférablement de bois.

9. Procédé selon l'une des revendications 7 et 8, dans lequel l'agent de refroidissement est de l'eau ou de l'air ambiant.

10. Procédé selon l'une des revendications 7 à 9, comprenant en outre l'étape viii) consistant à soumettre la bio-huile obtenue à l'étape vii) à une étape de séchage afin de fournir une bio-huile ayant une teneur en eau inférieure à 1% p/p ; où, de préférence, l'étape vii) est réalisée en présence d'une amine choisie dans le groupe constitué de l'ammoniac, des amines primaires, secondaires et tertiaires.

11. Procédé selon l'une des revendications 7 à 10, dans lequel le matériau carbonisé (9) a une teneur en carbone comprise entre 70 et 100% en poids par rapport à la masse séchée du matériau carbonisé, de préférence entre 80 et 90% en poids par rapport à la masse séchée du matériau carbonisé (9).

12. Procédé selon l'une des revendications 8 à 11, dans lequel lesdits acides sont des acides pyroligneux (FR3) ayant une teneur en eau comprise entre 70 et 90% p/p et une teneur en hydrocarbures oxygénés comprise entre 30 et 10% p/p.

13. Procédé selon l'une quelconque ou plusieurs des revendications 8 à 12, dans lequel le gaz émis par l'unité de conversion est collecté et fourni à un brûleur pour être utilisé en tant que source de production d'énergie pour le réacteur de pyrolyse.

14. Utilisation du système selon les revendications 1 à 6 pour réaliser le procédé des revendications 7 à 13.

15. Utilisation d'un système selon l'une quelconque ou plusieurs des revendications 1 à 6 pour la production d'au moins un matériau carbonisé et une bio-huile.
